(19) Europäisches Patentamt
European Patent Office
Office européen des brevets

(11) **EP 3 829 017 A1**

(12) **EUROPÄISCHE PATENTANMELDUNG**

(43) Veröffentlichungstag:
**02.06.2021 Patentblatt 2021/22**

(51) Int Cl.:
*H02J 3/38* *(2006.01)*     *F03D 7/02* *(2006.01)*
*F03D 7/04* *(2006.01)*     *F03D 9/25* *(2016.01)*

(21) Anmeldenummer: **20202786.8**

(22) Anmeldetag: **20.10.2020**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(30) Priorität: **27.11.2019 DE 102019132120**

(71) Anmelder: **Wobben Properties GmbH
26607 Aurich (DE)**

(72) Erfinder: **BROMBACH, Johannes
13437 Berlin (DE)**

(74) Vertreter: **Eisenführ Speiser
Patentanwälte Rechtsanwälte PartGmbB
Postfach 10 60 78
28060 Bremen (DE)**

(54) **VERFAHREN ZUM BEREITSTELLEN EINER ANGEFORDERTEN WIRKLEISTUNG**

(57)     Verfahren zum Bereitstellen einer angeforderten Wirkleistung umfassend die Schritte:
- Empfangen der angeforderten Wirkleistung für den Übertragungsein-speisepunkt;,
- Verwenden eines Wirkleistungsbandes, mit
- einer Bandobergrenze und einer Banduntergrenze, die jeweils mit einem Abstand (um die angeforderte Wirkleistung angeordnet sind, wobei

- das Wirkleistungsband wenigstens einen Steuerschwellwert zwischen der Bandobergrenze und der Banduntergrenze aufweist;
- Steuern wenigstens eines regenerativen Energieerzeugers in Abhängigkeit des wenigstens einen Steuerschwellwertes, insbesondere um die angeforderte Wirkleistung als Übertragungsleistung am Übertragungseinspeisepunkt bereitzustellen.

Fig. 2

**Beschreibung**

Die vorliegende Erfindung betrifft ein Verfahren zum Bereitstellen einer angeforderten Wirkleistung an einem Übertragungseinspeisepunkt eines elektrischen Versorgungsnetzes, der einen ersten Spannungsabschnitt mit einem zweiten Spannungsabschnitt elektrisch verbindet. Zudem betrifft die vorliegende Erfindung einen Leistungsregler zum Bereitstellen einer angeforderten Wirkleistung an einem Übertragungseinspeisepunkt eines elektrischen Versorgungsnetzes, einen Windpark zum Bereitstellen einer angeforderten Wirkleistung an einem Übertragungseinspeisepunkt eines elektrischen Versorgungsnetzes und eine Windenergieanlage zum Bereitstellen einer angeforderten Wirkleistung an einem Übertragungseinspeisepunkt eines elektrischen Versorgungsnetzes.

Ein elektrisches Versorgungsnetz, wie beispielsweise das europäische Verbundnetz, und dessen Aufbau sind allgemein bekannt.

Grundsätzlich weist ein elektrisches Versorgungsnetz unterschiedliche Netz- bzw. Spannungsabschnitte mit unterschiedlichen Spannungsebenen auf.

Die unterschiedlichen Netz- bzw. Spannungsabschnitte sind dabei sowohl horizontal, also mit einer gleichen Spannungsebene, als auch vertikal, also mit unterschiedlicher Spannungsebene, untereinander verbunden.

Zudem sind die unterschiedlichen Netz- bzw. Spannungsabschnitte über Transformatoren bzw. Transformatorstationen miteinander verbunden.

Neben dieser grundsätzlichen Anordnung der Spannungsabschnitte, ist es zudem üblich, dass die verschiedenen Spannungsabschnitte unterschiedliche Funktionen aufweisen. Dabei kann im Wesentlichen in zwei funktionale Netz- bzw. Spannungsabschnitte unterschieden werden, nämlich in Übertragungsnetzabschnitte und Verteilnetzabschnitte.

Ein Übertragungsnetzabschnitt überträgt im Wesentlichen Leistung zwischen wenigstens zwei Verteilnetzen bzw. Verteilnetzabschnitten. Ein Übertragungsnetzabschnitt ist also im Wesentlichen für den übergeordneten Leistungs- bzw. Energietransport zwischen verschiedenen Netzabschnitten vorgesehen. Mehrere Übertragungsnetzabschnitte können darüber hinaus auch funktional zu einem Übertragungsnetz zusammengefasst werden. An ein solches Übertragungsnetz sind zumeist keine Energieerzeuger direkt angeschlossen - ein Übertragungsnetz verteilt also die von Kraftwerken erzeugte Leistung üblicherweise landesweit. Übertragungsnetze werden zudem von einem Übertragungsnetzbetreiber betrieben.

Ein Verteilnetzabschnitt hingegen ist für die Verteilung elektrischer Leistung vorgesehen. An einem Verteilnetzabschnitt sind dabei zumeist Verbraucher, aber auch Erzeuger angeschlossen, wie bspw. Industrieanlagen und mittelgroße Kraftwerke. Verteilnetzabschnitte werden üblicherweise von einem Verteilnetzbetreiber betrieben.

Auch sind weitere Abstufungen des Verteilnetzes bekannt, wie zum Beispiel in Deutschland das Mittelspannungsnetz oder das Niederspannungsnetz.

Aufgrund von Störungen innerhalb des elektrische Energieversorgungsnetzes kann es nun dazu kommen, das einzelne Netzabschnitte oder weite Teile des elektrischen Versorgungsnetzes ausfallen, also keine Netzspannung mehr aufweisen (engl. "Black out"). Nach einem solchen Netzausfall ist grundsätzlich ein Netzwiederaufbau notwendig.

Als Ausgangspunkt für den Netzwiederaufbau nimmt der Netzbetreiber üblicherweise zunächst einen schwarzstartfähigen Erzeuger innerhalb seines Netzabschnittes in Betrieb. Entsprechend eines Fahrplanes des Netzbetreibers werden anschließend nach und nach Verbraucher und weitere Kraftwerke auf den Netzabschnitt aufgeschaltet, solange bis der gesamte Netzabschnitt wieder ordnungsgemäß betreibbar ist.

Beim diesem klassischen Netzwiederaufbau nach einer Großstörung eines ausgefallenen elektrischen Versorgungsnetzes gibt der Übertragungsnetzbetreiber dem Verteilnetzbetreiber üblicherweise vor, zu welchem Zeitpunkt [in Minuten] und in welcher Größe [in +/-MW] ein Spannungsabschnitt zugeschaltet werden soll.

Sind an dem zugeschalteten Spannungsabschnitt auch regenerative Erzeuger angeschlossen, so kann es nach der Zuschaltung eines solchen Spannungsabschnittes teilweise zu schwer vorhersehbaren Einspeisung kommen, insbesondere aufgrund von Erzeugungsunstetigkeiten der regenerativen Erzeuger.

Im Extremfall kann es sogar zu einer ungewollten Rückspeisung in den bereits aufgebauten Spannungsabschnitt kommen, so dass dieser aufgrund zu hoher Leistung im Spannungsabschnitt wieder aus- bzw. schwarzfällt.

Aus diesem Grund werden regenerative Erzeuger in kritischen Netzsituationen mit ihrer Leistungserzeugung eingesenkt, insbesondere gedrosselt, und zudem aus dem Netzwiederaufbau herausgenommen, insbesondere um den Einfluss von regenerativen Erzeuger während des Netzwiederaufbaus weitgehend zu minimieren.

Problematisch hierbei ist, dass konventionelle Kraftwerke für den Netzwiederaufbau nicht immer zu Verfügung stehen, beispielsweise aufgrund von Revisions- und/oder Wartungsarbeiten. Darüber hinaus ist es im Zuge der Energiewende wünschenswert, wenn regenerative Erzeuger einen Beitrag zum Netzwiederaufbau leisten könnten.

Das Deutsche Patent- und Markenamt hat in der Prioritätsanmeldung zur vorliegenden Anmeldung folgenden Stand der Technik recherchiert: US 2010/0 264 741 A1 und DE 10 2007 044 601 A1.

Aufgabe der vorliegenden Erfindung ist es somit, zumindest eines der oben genannten Probleme zu adressieren, insbesondere soll eine Lösung vorgeschlagen werden, die einen von konventionellen Kraftwerken unabhängigen Netzwiederaufbau ermöglicht. Zumindest aber soll eine Alternative zu bisher bekannten Lösungen vorgeschlagen werden.

Erfindungsgemäß wird somit ein Verfahren gemäß Anspruch 1 vorgeschlagen, nämlich ein Verfahren zum Bereitstellen einer angeforderten Wirkleistung an einem Übertragungseinspeisepunkt eines elektrischen Versorgungsnetzes, der einen ersten Spannungsabschnitt mit einem zweiten Spannungsabschnitt elektrisch verbindet, wobei der zweite Spannungsabschnitt wenigstens einen regenerativen Energieerzeuger, insbesondere eine Windenergieanlage, aufweist.

Es wird also vorgeschlagen, an einem Übertragungseinspeisepunkt eine angeforderte Wirkleistung mit wenigstens einem regenerativen Energieerzeuger bereitzustellen.

Der Übertragungseinspeisepunkt ist dabei ein Verbindungspunkt, an dem ein erster und ein zweiter Spannungsabschnitt elektrisch miteinander verbunden sind. Beispielsweise kann der Übertragungseinspeisepunkt an einem Transformator angeordnet sein, der den ersten und den zweiten Spannungsabschnitt elektrisch verbindet.

Der erste und der zweite Spannungsabschnitt sind dabei bevorzugt dreiphasig ausgebildet und weisen jeweils eine Netzspannung auf, die wenigstens 10kV beträgt. Beispielsweise sind der erste und der zweite Spannungsabschnitt vertikal als Übertragungsnetzabschnitt und Verteilnetzabschnitt oder horizontal als zwei Verteilnetzabschnitte ausgebildet.

Die angeforderte Wirkleistung kann beispielsweise durch einen Wirkleistungssollwert oder eine sonstige Wirkleistungsvorgabe von einem Netzbetreiber realisiert werden - die Erzeugung der angeforderten Wirkleistung erfolgt dabei durch den regenerativen Erzeuger des zweiten Spannungsabschnittes.

In einer bevorzugten Ausführungsform erfolgt das Bereitstellen der angeforderten Wirkleistung mittels eines Windparks, der dazu eingerichtet ist, eine Windparkleistung an den zweiten Spannungsabschnitt bereitzustellen.

In einer weiter bevorzugten Ausführungsform erfolgt das Bereitstellen der angeforderten Wirkleistung in einer Netzwiederaufbausituation. Eine Netzwiederaufbausituation beschreibt dabei eine Situation in der ein elektrischer Wiederaufbau der Netzspannung von Spannungsabschnitten des elektrischen Versorgungsnetzes notwendig ist, beispielsweise nach einem eingangsbeschriebenen Schwarzfall bzw. "Black out".

In einem ersten Schritt des erfindungsgemäßen Verfahrens wird nun die angeforderte Wirkleistung für den Übertragungseinspeisepunkt empfangen.

Es wird also insbesondere vorgeschlagen, dass die angeforderte Wirkleistung als Zielwert der Wirkleistung empfangen wird, also der Leistungswert, der zwischen dem ersten und zweiten Spannungsabschnitt eingestellt werden soll. Diese angeforderte Wirkleistung kann auch als angeforderte Austauschleistung bezeichnet werden.

Beispielsweise kann der Netzbetreiber des ersten Spannungsabschnittes eine bestimmte Wirkleistung [in MW] am Übertragungseinspeisepunkt zu einem bestimmten Zeitpunkt [in Minuten] für den Netzwiederaufbau mit einem Sollwertsignal anfordern. Die angeforderte Wirkleistung kann hierfür beispielsweise in einer Leitwarte eines Verteilnetzbetreibers oder in einem Sekundärleistungsregler eines Netzabschnittes als Eingangsgröße empfangen werden.

Anschließend, wird in einem nächsten Schritt ein Wirkleistungsband mit einer Bandobergrenze und einer Banduntergrenze verwendet. Die Bandobergrenze und die Banduntergrenze sind dabei jeweils mit einem Abstand um die angeforderte Wirkleistung angeordnet. Zudem weist das Wirkleistungsband wenigstens einen Steuerschwellwert zwischen der Bandobergrenze und der Banduntergrenze auf.

Es wird also insbesondere vorgeschlagen, dass um die angeforderte Wirkleistung ein Leistungsband zur Steuerung der Übertragungsleistung an dem Übertragungseinspeisepunkt gelegt bzw. aufgespannt wird. Beispielsweise kann die angeforderte Wirkleistung in Megawatt als konstante Wirkleistungssollwert $P_{soll}$ in der Mitte des Wirkleistungsbandes zwischen der Bandobergrenze und der Banduntergrenze angeordnet sein.

Bevorzugt wird das Wirkleistungsband von einem Netzbetreiber festgelegt bzw. definiert.

Das Wirkleistungsband wird also beispielsweise von einem Übertragungsnetzbetreiber oder einem Verteilnetzbetreiber vorgegeben.

Es wird ferner auch vorgeschlagen, dass die beiden Bandgrenzen in Bezug auf die angeforderte Wirkleistung jeweils einen Abstand aufweisen.

Die Bandobergrenze kann hierfür beispielsweise einen positiven Abstand zur angeforderten Wirkleistung aufweisen und die Banduntergrenze einen negativen Abstand.

Die Abstände können beispielsweise absolut in Megawatt oder relativ in Prozent vorgegeben sein.

Zudem wird auch vorgeschlagen, wenigstens einen Steuerschwellwert im Wirkleistungsband zwischen der Bandobergrenze und der Banduntergrenze anzuordnen.

Derwenigstens eine Steuerschwellwert kann beispielsweise ein Schwellwert sein, der eine Erhöhung der Wirkleistungseinspeisung des wenigstens einen, regenerativen Energieerzeugers auslöst, wenn der Schwellwert erreicht wird. Ein solcher Schwellwert kann auch als Steigschwellwert bezeichnet werden.

Es können aber auch mehrere Steuerschwellwerte in dem Wirkleistungsband angeordnet sein, beispielsweise drei Steuerschwellwerte.

Ein erster Steuerschwellwert kann also beispielsweise der zuvor beschriebene Steigschwellwert sein.

Ein zweiter Steuerschwellwert kann beispielsweise ein Schwellwert sein, der eine Reduzierung der Wirkleistungseinspeisung des wenigstens einen, regenerativen Energieerzeugers auslöst, wenn der Schwellwert erreicht wird. Ein solcher Schwellwert kann als Reduzierschwellwert bezeichnet werden.

Ein dritter Steuerschwellwert kann beispielsweise ein Schwellwert sein, der ein Konstanthalten der Wirkleistungseinspeisung des wenigstens einen, regenerativen Energieerzeugers auslöst, wenn der Schwellwert erreicht wird. Ein solcher Schwellwert kann als Konstantschwellwert bezeichnet werden.

Anschließend, wird in einem weiteren Schritt der wenigstens eine regenerative Energieerzeuger, insbesondere der Windpark, in Abhängigkeit des wenigstens einen Steuerschwellwertes gesteuert, insbesondere um die angeforderte Wirkleistung als Übertragungsleistung am Übertragungseinspeisepunkt bereitzustellen.

Es wird also insbesondere vorgeschlagen, dass eine Änderung der Einspeisung des wenigstens einen regenerativen Energieerzeugers durch den wenigstens einen Steuerschwellwertes ausgelöst wird.

Bevorzugt erfolgt das Auslösen des wenigstens einen Steuerschwellwertes in Abhängigkeit einer erfassten Übertragungsleistung am Übertragungseinspeisepunkt. Beispielsweise kann die Übertragungsleistung am Übertragungseinspeisepunkt durch eine Messung am

Übertragungseinspeisepunkt erfasst bzw. bestimmt werden. Die so erfasste Übertragungsleistung kann insoweit auch als ein Triggersignal verstanden werden.

Durch das erfindungsgemäße Verfahren wird also erreicht, dass ein Netzbetreiber beim Netzwiederaufbau die einzustellende Wirkleistung am Übertragungseinspeisepunkt bzw. die Austauschleistung mit dem definierten Wirkleistungsband beliebig vorgeben kann. Der Netzbetreiber kann also Lastzuschaltungen durchführen und entsprechende Regeleinheit sorgen dafür, dass das Wirkleistungsband eingehalten wird. Zudem ist es möglich die regenerativen Erzeuger mit dem Wirkleistungsband kontrolliert zu steuern, wodurch diese am Netzwiederaufbau teilnehmen können.

Besonders vorteilhaft ist zudem, dass die regenerativen Energieerzeuger entkoppelt von konventionellen Kraftwerken einen Netzwiederaufbau sicherstellen können.

Vorzugsweise weist der erste Spannungsabschnitt des elektrischen Versorgungsnetzes eine erste Nennspannung und der zweite Spannungsabschnitt des elektrischen Versorgungsnetzes eine zweite Nennspannung auf, wobei die erste Nennspannung größer als die zweite Nennspannung ist.

Es wird somit insbesondere vorgeschlagen, dass der erste Spannungsabschnitt vertikal zum zweiten Spannungsabschnitt angeordnet ist und der zweite Spannungsabschnitt, an dem der regenerative Energieerzeuger bzw. der Windpark angeschlossen ist, eine kleinere Nennspannung aufweist.

Bevorzugt beträgt die erste Nennspannung bspw. wenigstens 110kV oder 220kV oder 380kV. Der erste Spannungsabschnitt ist also bevorzugt als Übertragungsnetzabschnitt ausgebildet und weist eine Hochspannung bzw. eine Höchstspannung auf.

In einer weiteren Ausführungsform beträgt die zweite Nennspannung bevorzugt wenigstens 10kV bzw. 110kV. Der zweite Spannungsabschnitt ist also bevorzugt als Verteilnetzabschnitt ausgebildet und weist eine Mittelspannung bzw. Hochspannung auf.

Vorzugsweise ist am Übertragungseinspeisepunkt ein Transformator angeordnet, wobei der Transformator dazu eingerichtet ist, den ersten Spannungsabschnitt und den zweiten Spannungsabschnitt elektrisch miteinander zu verbinden.

Es wird also insbesondere vorgeschlagen, dass die Spannungsabschnitte über einen Transformator zum Leistungsaustausch miteinander verbunden sind. Beispielsweise ist der Transformator als ein Verteilnetzoder als ein Hochspannungstransformator ausgebildet.

In einer weiter bevorzugten Ausführungsform ist der Transformator als ein Hochspannungstransformator ausgebildet, insbesondere um Spannungsabschnitte mit unterschiedlichen Spannungsebenen bzw. unterschiedlichen Nennspannungen elektrisch miteinander zu verbinden.

Vorzugsweise wird das Wirkleistungsband von einem Übertragungsnetzbetreiber empfangen.

Es wird somit insbesondere auch vorgeschlagen, dass das Wirkleistungsband von einem Übertragungsnetzbetreiber festgelegt wird und beispielsweise über ein Netzleitsystem empfangen werden kann.

Vorzugsweise erfolgt das Steuern des wenigstens einen regenerativen Energieerzeugers in Abhängigkeit wenigstens einer erfassten Übertragungsleistung, wobei die Übertragungsleistung an einem bzw. dem Übertragungseinspeisepunkt erfasst wird.

Es wird also auch vorgeschlagen, dass die Übertragungsleistung für das Bandsteuerprinzip erfasst bzw. bestimmt wird.

Hierfür wird bspw. am Übertragungseinspeisepunkt eine Messeinheit angeordnet, die dazu eingerichtet ist, die Wirkleistung und deren Richtung am Übertragungseinspeisepunkt zu bestimmen. Hierfür ist die Messeinheit bspw. als ein mehrphasiges Leistungsmessgerät ausgebildet. Zusätzlich oder alternativ kann die Messeinheit beispielsweise auch dazu eingerichtet sein, eine Lastflussberechnung auszuführen, um die Wirkleistung am Übertragungseinspeisepunkt zu berechnen.

Besonders bevorzugt wird die Übertragungsleistung an dem Übertragungseinspeisepunkt von einem Verteilnetzbetreiber erfasst.

In einer bevorzugten Ausführungsform wird eine bzw. die erfasste Übertragungsleistung als Triggersignal zum Auslösen des wenigstens einen Steuerschwellwertes verwendet. Vorzugsweise ist der jeweilige Abstand der Bandobergrenze und der Banduntergrenze um die angeforderte Wirkleistung ein Relativabstand in Bezug auf die angeforderte Wirkleistung.

Es wird somit insbesondere vorgeschlagen, dass der Abstand der Bandgrenzen als Relativwert ausgebildet ist, der beispielsweise als Prozentwert in Bezug auf die angeforderte Wirkleistung von einem Netzbetreiber vorgegeben wird. Der Relativwert kann bpsw. positiv oder negativ sein, beispielsweise +/-5%, +/-00% oder +-15% der angeforderten Wirkleistung.

Vorteilhaft an einem Relativabstand ist, dass sich die Bandgrenzen automatisch an Wert der angeforderten Wirkleistung anpassen.

Vorzugsweise ist der Abstand der Bandobergrenze und der Banduntergrenze um die angeforderte Wirkleistung zusätzlich oder alternativ ein Absolutabstand in Bezug auf die angeforderte Wirkleistung.

Es wird also insbesondere auch vorgeschlagen, dass der Abstand der Bandgrenzen als Absolutwert ausgebildet ist, der beispielsweise als Leistungswert in Bezug auf die angeforderte Wirkleistung ausgebildet ist, der von einem Netzbetreiber vorgegeben wird. Der Absolutwert kann also positiv oder negativ sein, beispielsweise +/- 10MW, +/-20MW, oder +/-50MW.

Vorteilhaft bei einem Absolutabstand ist, dass dieser unabhängig von der angeforderten Wirkleistung vorgegeben werden kann, und dieses an eine bzw. die vorhandene Momentanreserve angepasst werden kann.

Es sind aber auch Mischformen möglich, beispielsweise relative Bandobergrenze und absolute Banduntergrenze.

Darüber hinaus können die Bandobergrenze und die Banduntergrenze auch einen unterschiedlichen Abstand zur angeforderten Wirkleistung aufweisen können.

Vorzugsweise umfasst der jeweilige Abstand der Bandobergrenze und der Banduntergrenze jeweils einen Mindestabstand in Bezug auf die angeforderte Wirkleistung, der bevorzugt als Absolutwert ausgebildet ist.

Ein solcher als Absolutwert vorgebenener Mindestabstand kann dabei als Absolutmindestabstand bezeichnet werden. Der Absolutmindestabstand kann positiv und negativ sein, beispielsweise +/-5 MW, +/-12.5 MW, oder +/-25 MW.

Vorteilhaft an dem Mindestabstand ist, dass hierdurch die Sicherheit beim Netzwiederaufbau erhöht wird.

Vorzugsweise ist der Abstand der Bandobergrenze ein vorbestimmter positiver Abstand oder ein vorbestimmter negativer Abstand zu der angeforderten Wirkleistung.

Ein solcher positiver bzw. negativer Abstand kann dabei als Positivabstand bzw. Negativabstand bezeichnet werden.

Es wird also insbesondere vorgeschlagen, die maximale Wirkleistung am Übertragungseinspeisepunkt zu begrenzen, insbesondere durch eine Bandobergrenze, die die maximale Wirkleistung am Übertragungseinspeisepunkt begrenzt.

In einer weiteren Ausführungsform wird auch vorgeschlagen, die minimale Wirkleistung am Übertragungseinspeisepunkt zu begrenzen, insbesondere durch eine Banduntergrenze, die die minimale Wirkleistung am Übertragungseinspeisepunkt begrenzt.

Die Begrenzung der Übertragungsleistung am Übertragungseinspeisepunkt kann also bspw. vom Netzbetreiber durch Vorgabe einer entsprechenden Bandobergrenze bzw. Banduntergrenze erfolgen.

Vorteilhaft dabei ist, dass der Netzbetreiber auf einfache Weise den maximalen oder minimalen Wirkleistungsfluss vorgeben oder begrenzen kann.

Bevorzugt ist der Positivabstand bzw. der Negativabstand ein Abstand in einem Wertebereich von wenigstens 3% bis 6% einer mit dem zweiten Spannungsabschnitt gekoppelten konventionellen installierten Leistung, bzw. eine Leitung mit einer Bereitstellung einer Momentanreserve.

Die konventionelle installierte Leistung beschreibt dabei eine Summe von Nennleistungen aller konventionellen Energieerzeuger, die an den zweiten Spannungsabschnitt angeschlossenen sind. Die konventionelle installierte Leistung ist einem Netzbetreiber dabei üblicherweise bekannt.

Bevorzugt können unter konventionellen Energieerzeugern auch Erneuerbare Energien und/oder Speicher verstanden werden, welche Frequenzstützungseigenschaften aufweisen, also all jene Erzeuger, die dazu eingerichtet und dazu vorgesehen sind, an einer Bereitstellung einer Momentanreserve mitzuwirken.

Der Positivabstand bzw. Negativabstand kann aber auch ein Abstand in einem Wertebereich von 40% bis 60% oder 60% bis 80% der angeforderten Wirkleistung sein. Je nach Größe des Netzabschnittes, bspw. 2 GW Nennleistung, kann der Wertebereich aber auch zwischen 0,5% bis 10% liegen.

Vorzugsweise weist das Wirkleistungsband eine einstellbare Wirkleistungsbandbreite auf, wobei die Wirkleistungsbandbreite eine Betragssumme der Abstände der Bandobergrenze und der Banduntergrenze zur angeforderten Wirkleistung ist.

Es wird somit insbesondere auch vorgeschlagen, dass die Bandbreite des Wirkleistungsbandes einstellbar ist.

Besonders bevorzugt beträgt die Wirkleistungsbandbreite wenigstens 10MW, insbesondere wenigstens 25MW oder wenigstens 50MW.

Vorzugsweise wird das Wirkleistungsband im laufenden Betrieb verändert wird.

Es wird somit insbesondere auch vorgeschlagen, dass das Wirkleistungsband in einer Netzaufbausituation verändert wird.

In einer bevorzugten Ausführungsform wird das Wirkleistungsband wenigstens durch ein Vergrößern oder Verkleinern einer Wirkleistungsbandbreite, ein Verändern des Abstands der Bandobergrenze, ein Verändern des Abstands der Banduntergrenze und/oder ein Verschieben des Wirkleistungsbandes um einen vorbestimmten Offsetfaktor verändert.

Es wird somit insbesondere vorgeschlagen, dass die Bandgrenzen oder die Wirkleistungsbandbreite im laufenden Betrieb individuell der Netzsituation angepasst werden.

Zudem wird vorgeschlagen einen Offsetfaktor vorzusehen mit dem die Position des Wirkleistungsbands um die angeforderte Wirkleistung herum verändert werden kann. Vorteilhaft ist demnach, dass eine Möglichkeit bereitgestellt wird, das Wirkleistungsband an die individuelle Netzaufbausituation im laufenden Betrieb anpassen zu können.

Besonders bevorzugt erfolgt das Verändern des Wirkleistungsbandes in Abhängigkeit eines Empfangens eines externen Änderungssignals. Das externe Änderungssignal kann dabei beispielsweise von einem Übertragungsnetzbetreiber oder einem Verteilnetzbetreiber empfangen werden. Das externe Änderungssignal kann dabei auch als Anweisung aufgefasst werden, die von einem Netzbetreiber im Rahmen seiner Befugnisse an den Eigentümer eines Erzeugers oder eines Verbrauchsgestellt wird.

In einer weiteren Ausführungsform erfolgt die Veränderung des Wirkleistungsbandes in Abhängigkeit einer Stabilitätsgröße des elektrischen Versorgungsnetzes.

Eine Stabilitätsgröße des elektrischen Versorgungsnetzes drückt dabei aus, wie stark das Netz auf eine Änderung einer Größe reagiert, die einen Einfluss auf den Spannungsabschnitt nimmt.

Eine Stabilitätsgröße kann beispielsweise eine Netzsensitivität sein, die anzeigt, wie sich eine Nennspannung des zweiten Spannungsabschnittes in abhängig einer geänderten Blindleistungseinspeisung im zweiten Spannungsabschnitt ändert (NS = $\Delta U/\Delta Q$) oder wie sich eine Nennfrequenz des zweiten Spannungsabschnittes in abhängig einer geänderten Wirkleistungseinspeisung im zweiten Spannungsabschnitt ändert (NS = $\Delta f/\Delta P$).

Die Stabilitätsgröße kann beispielsweise auch ein Kurzschlussstromverhältnis sein.

Das Kurzschlussstromverhältnis, das auch als SCR (Short Circuit Ratio) bezeichnet wird, bezeichnet das Verhältnis der Kurzschlussleistung zur Anschlussleistung.

In einer weiteren Ausführungsform erfolgt die Veränderung des Wirkleistungsbandes in Abhängigkeit einer Anzahl von an den zweiten Spannungsabschnitt gekoppelten regenerativen Energieerzeugern.

In einer weiteren Ausführungsform erfolgt die Veränderung des Wirkleistungsbandes in Abhängigkeit einer installierten Gesamtleistung im Versorgungsnetz.

Die installierte Gesamtleistung beschreibt dabei die aufaddierte maximale Nennleistung der installierten Generatoren eines Netzabschnittes.

In einer weiteren Ausführungsform erfolgt die Veränderung des Wirkleistungsbandes in Abhängigkeit einer Anzahl und Größe an den zweiten Spannungsabschnitt zuzuschaltenden Lasten.

In einer weiteren Ausführungsform erfolgt die Veränderung des Wirkleistungsbandes in Abhängigkeit der aktuell schaltenden Netzbetreiber, also insbesondere Verteilnetzbetreiber, welche Lasten zuschalten und mit der regenerativen Erzeugung die Leistung wieder ausregeln.

Eine zuzuschaltende Last kann dabei beispielsweise ein weitere Verteilnetzabschnitt oder ein Verbraucher, wie bspw. eine Industrieanlage sein.

Es wird somit insbesondere auch vorgeschlagen, dass die Veränderung des Wirkleistungsbands anhand von den zuvor beschriebenen Kriterien verändert wird.

Bevorzugt erfolgt die Veränderung dabei automatisiert.

Beispielsweise wird das Wirkleistungsband verbreitert, wenn das empfangene, externe Änderungssignal von einem Übertragungsnetzbetreiber dazu auffordert, oder es wird verbreitert, je stabiler der Spannungsabschnitt ist, je größer die Anzahl gekoppelter regenerativer Energieerzeuger ist, je größer die installierte Gesamtleistung ist, je größer die gesamte synchrone Schwungmasse ist, oder je mehr und größer die zuzuschaltenden Lasten sind.

Durch die Berücksichtigung solcher Einflussfaktoren wird insbesondere ein schneller und sicherer Netzwiederaufbau ermöglicht.

Vorzugsweise ist ein Steuerschwellwert ein vorstehend oder nachstehend beschriebener Steigschwellwert.

Es wird also insbesondere auch vorgeschlagen, einen Schwellwert vorzusehen, der eine Erhöhung der Wirkleistungseinspeisung im zweiten Spannungsabschnitt des regenerativen Energieerzeugers auslöst.

Wird also beispielsweise 5MW am Übertragungseinspeisepunkt von einem Übertragungsnetzbetreiber angefordert, beträgt der Steigschwellwert ebenfalls 5MW.

Bevorzugt ist der Steigschwellwert dazu vorgesehen eine Erhöhung der Wirkleistungseinspeisung des wenigstens einen, regenerativen Energieerzeugers auszulösen, wenn der Steigschwellwert positiv erreicht wird.

Ein Auslösen eines Schwellwertes bzw. des Steigschwellwert mit einer positiven Schaltflanke wird dabei als positiv erreicht bezeichnet. Dazu kann der Steigschwellwert beispielsweise in einer Steuereinheit hinterlegt sein, die dazu eingerichtet ist, in Abhängigkeit des Steigschwellwerts ein Steuersignal zum Erhöhung der Wirkleistungseinspeisung des regenerativen Energieerzeugers zu generieren.

Vorteilhaft daran ist, dass eine einfache Möglichkeit für einen Netzbetreiber bereitgestellt wird, eine Erhöhung der Wirkleistungseinspeisung auszulösen, nämlich dann, wenn ein ausreichender Abstand zur Bandobergrenze und Banduntergrenze vorliegt.

Vorzugsweise ist ein Steuerschwellwert ein vorstehend oder nachstehend beschriebener Reduzierschwellwert.

Es wird somit insbesondere auch vorgeschlagen, einen Schwellwert vorzusehen, der eine Reduzierung der eingespeisten Wirkleistung im zweiten Spannungsabschnitt des regenerativen Energieerzeugers auslöst.

Wird also beispielsweise -2.5MW als Banduntergrenze von einem Übertragungsnetzbetreiber empfangen, beträgt der Reduzierschwellwert ebenfalls -2.5MW.

Bevorzugt ist der Reduzierschwellwert dazu vorgesehen eine Reduzierung der Wirkleistungseinspeisung des wenigstens einen, regenerativen Energieerzeugers auszulösen, wenn der Reduzierschwellwert negativ erreicht wird.

Ein Auslösen eines Schwellwertes bzw. des Reduzierschwellwerts mit einer negativen Schaltflanke wird dabei als negativ erreicht bezeichnet. Dazu kann der Reduzierschwellwert beispielsweise in einer Steuereinheit hinterlegt sein, die dazu eingerichtet ist, in Abhängigkeit des Reduzierschwellwerts ein Steuersignal zum Reduzieren der Wirkleistungseinspeisung des regenerativen Energieerzeugers zu generieren.

Vorteilhaft ist daran, dass eine einfache Möglichkeit für einen Netzbetreiber bereitgestellt wird, eine Reduzierung der Wirkleistungseinspeisung auszulösen.

Vorzugsweise ist ein Steuerschwellwert ein vorstehend oder nachstehend beschriebener Konstantschwellwert.

Es wird somit insbesondere vorgeschlagen, einen Schwellwert vorzusehen, der ein Konstanthalten der eingespeisten Wirkleistung im zweiten Spannungsabschnitt des regenerativen Energieerzeugers auslöst.

Bevorzugt ist der Konstantschwellwert dazu vorgesehen, ein Konstanthalten der Wirkleistungseinspeisung des wenigstens einen, regenerativen Energieerzeugers auszulösen, wenn der Konstantschwellwert negativ erreicht wird.

Ein Auslösen des Konstantschwellwerts mit einer negativen Schaltflanke wird dabei als negativ erreicht bezeichnet. Dazu kann der Konstantschwellwert beispielsweise in einer Steuereinheit hinterlegt sein, die dazu eingerichtet ist, in Abhängigkeit des Konstantschwellwerts ein Steuersignal zum Konstanthalten der Wirkleistungseinspeisung des regenerativen Energieerzeugers generiert.

Vorteilhaft dabei ist, dass eine einfache Möglichkeit für einen Netzbetreiber bereitgestellt wird, eine Konstanthalten der Wirkleistungseinspeisung auszulösen, um einen wirkleistungsabhängigen Zustand bzw. Arbeitspunkt des zweiten Spannungsabschnittes nicht zu verändern.

Vorzugsweise wird ein Einspeisesignal in Abhängigkeit des jeweiligen Steuerschwellwerts erzeugt, wenn der jeweilige Steuerschwellwert erreicht wird, wobei das Einspeisesignal wenigstens einem steuerbaren regenerativen Energieerzeuger zum Steuern der Wirkleistungseinspeisung vorgeben wird, insbesondere um die Wirkleistungseinspeisung des steuerbaren regenerativen Energieerzeugers zu erhöhen, zu reduzieren oder konstantzuhalten,

Es wird also insbesondere auch vorgeschlagen, dass wenn einer der zuvor beschriebenen Steuerschwellwerte erreicht wird, ein dem Schwellwert zugeordnetes Einspeisesignal erzeugt wird, das anschließend einem steuerbaren regenerativen Energieerzeuger vorgegeben wird. Das Einspeisesignal ist also ein Steuersignal zum Steuern der Einspeisung des regenerativen Energieerzeugers.

Der steuerbare regenerative Energieerzeuger ist dabei ein regenerativer Energieerzeuger der dazu eingerichtet, das Einspeisesignal zu empfangen und seine Wirkleistungseinspeisung in Abhängigkeit des empfangenen Steuersignals zu verändern.

Zusätzlich oder alternativ wird vorzugsweise vorgeschlagen, dass ein Zuschaltsignal in Abhängigkeit des jeweiligen Steuerschwellwerts erzeugt wird, wenn der jeweilige Steuerschwellwert erreicht wird, wobei das Zuschaltsignal wenigstens einem zuschaltbaren regenerativen Energieerzeuger zum Steuern der Wirkleistungseinspeisung vorgeben wird, insbesondere um den zuschaltbaren regenerativen Energieerzeugers an den zweiten Spannungsabschnitt zuzuschalten oder wegzuschalten.

Es wird also insbesondere auch vorgeschlagen, dass wenn einer der zuvor beschriebenen Steuerschwellwerte erreicht wird, ein dem Schellwert zugeordnetes Zuschaltsignal erzeugt wird, das anschließend einem zuschaltbaren regenerativen Energieerzeuger vorgegeben wird. Das Zuschaltsignal ist also ein Steuersignal zum Steuern der Einspeisung durch Kopplung oder Entkopplung des regenerativen Energieerzeugers mit dem zweiten Spannungsabschnitt.

Der zuschaltbare regenerative Energieerzeuger ist dabei ein regenerativer Energieerzeuger, der dazu eingerichtet das Zuschaltsignal zu empfangen und in Abhängigkeit des empfangenen Signals mittels einer Schalteinrichtung mit dem zweiten Spannungsabschnitt elektrisch gekoppelt oder entkoppelt zu werden.

Vorzugsweise wird eine bzw. die angeforderte Wirkleistung und/oder das Wirkleistungsband von einem Netzbetreiber vorgegeben.

Hierfür kann beispielsweise ein Übertragungsnetzbetreiber den Wirkleistungssollwert in einer Leitstelle generieren und über ein Netzleitsystem an eine Leitstelle des Verteilnetzbetreibers übertragen, beispielsweise per LAN oder WAN.

In einer bevorzugten Ausführungsform wird die angeforderte Wirkleistung als ein Wirkleistungssollwert von einem Übertragungsnetzbetreiber vorgegeben, beispielsweise vom Übertragungsnetzbetreiber des ersten Spannungsabschnittes.

In einer weiteren bevorzugten Ausführungsform wird vorgeschlagen, dass die angeforderte Wirkleistung von einem Netzbetreiber als ein über der Zeit konstant oder rampenförmig verlaufender Wirkleistungssollwert vorgegeben.

Besonders vorteilhaft hierbei ist, dass eine einfache Möglichkeit für den Netzbetreiber bereitgestellt wird, eine individuelle Vorgabe des Wirkleistungssollwert umsetzen zu können, an den die regenerativen Energieerzeuger ihre Einspeisung anpassen. Der Wirkleistungssollwert bzw. damit auch das Austauschleistungsband kann beispielsweise konstant bleiben, wenn der Übertragungsnetzbetreiber (kurz: ÜNB) keine zusätzliche Einspeisung benötigt, rampenförmig hochgefahren werden, wenn der ÜNB weniger Einspeisung benötigt, oder rampenförmig abgesenkt, wenn der ÜNB mehr Wirkleistung benötigt.

Vorzugsweise wird der wenigstens eine Steuerschwellwert im laufenden Betrieb verändert.

In einer weiteren Ausführungsform wird der Steuerschwellwert im laufenden Betrieb durch ein Vergrößern oder Verkleinern des Steigschwellwertes verändert, durch ein Vergrößern oder Verkleinern des Reduzierschwellwertes, oder durch ein Vergrößern oder Verkleinern des Konstantschwellwertes.

Es wird somit insbesondere vorgeschlagen, dass wenigstens ein Steuerschwellwert verändert wird.

Vorteilhaft dabei ist, dass einem Netzbetreiber eine Möglichkeit bereitgestellt werden kann, die Schwellwerte des Wirkleistungsbands an die individuelle Netzaufbausituation laufend anpassen zu können.

In einer bevorzugten Ausführungsform erfolgt die Veränderung des wenigstens einen Steuerschwellwertes in Abhängigkeit eines Empfangens eines externen Änderungssignals, in Abhängigkeit einer Stabilitätsgröße des elektrischen Versorgungsnetzes, in Abhängigkeit einer Anzahl von an den zweiten Spannungsabschnitt gekoppelten regenerativen Energieerzeugern, in Abhängigkeit einer installierten Gesamtleistung im Versorgungsnetz, in Abhängigkeit einer gesamten synchronen Schwungmasse im Versorgungsnetz oder in Abhängigkeit einer Anzahl und Größe an den zweiten Spannungsabschnitt zuzuschaltender Lasten, insbesondere wie zuvor beschrieben.

Vorzugsweise umfasst das Steuern des wenigstens einen, regenerativen Energieerzeugers in Abhängigkeit des wenigstens einen Steuerschwellwertes den weiteren Schritt: Vorgeben einer begrenzten Wirkleistungseinspeisung pro Zeit für den wenigstens einen regenerativen Energieerzeuger, wobei die vorgegebene Wirkleistungseinspeisung definiert ist als:

$$P_{reg} = k * P_{ab} / T_{int},$$

wobei k ein Begrenzungsfaktor ist, $P_{ab}$ eine Abgabeleistung des wenigstens einen, regenerativen Energieerzeugers ist, und $T_{int}$ ein vorbestimmtes Zeitintervall ist.

Es wird somit insbesondere vorgeschlagen, dass die Wirkleistungseinspeisung des wenigstens einen regenerativen Energieerzeugers nicht beliebig schnell erhöht oder reduziert wird, wenn zum Beispiel der Steig- oder Reduzierschwellwert ausgelöst wurde. Die Wirkleistungseinspeisung wird also über den Begrenzungsfaktor k und das vorbestimmte Zeitintervall $T_{int}$ begrenzt.

Vorzugsweise ist der Begrenzungsfaktor k ein Wert kleiner als 1.

In einer weiteren Ausführungsform liegt der Begrenzungsfaktor k in einem Bereich zwischen 0,2 bis 0,4, 0,4 bis 0,6, oder 0,6 bis 0,8.

Vorzugsweise wird der Begrenzungsfaktor k im laufenden Betrieb verändert.

In einer bevorzugten Ausführungsform wird der Begrenzungsfaktor k im laufenden Betrieb verändert, insbesondere in Abhängigkeit von einer Primärregelgeschwindigkeit konventioneller Energieerzeuger, die an den zweiten Spannungsabschnitt gekoppelt sind.

In einer weiteren bevorzugten Ausführungsform wird zusätzlich oder alternativ vorgeschlagen, dass der Begrenzungsfaktor k im laufenden Betrieb in Abhängigkeit einer Schwingung nach einer Leistungsfahrt verändert.

Eine Leistungsfahrt beschreibt dabei ein Anfahren und anschließendes Abfahren des zweiten Spannungsabschnittes, insbesondere um festzustellen wie der Spannungsabschnitt reagiert.

Vorzugsweise ist das vorbestimmte Zeitintervall $T_{int}$ kleiner als 10 Minuten.

In einer bevorzugten Ausführungsform ist das vorbestimmte Zeitintervall $T_{int}$ kleiner als 5 Minuten, kleiner als eine 1 Minute, oder kleiner als 30 Sekunden.

Erfindungsgemäß wird ferner ein Leistungsregler, insbesondere ein Sekundärleistungsregler, zum Bereitstellen einer angeforderten Wirkleistung an einem Übertragungseinspeisepunkt eines elektrischen Versorgungsnetzes vorgeschlagen, der einen ersten Spannungsabschnitt mit einem zweiten Spannungsabschnitt elektrisch verbindet, wobei der zweite Spannungsabschnitt wenigstens einen regenerative Energieerzeuger aufweist.

Der erfindungsgemäße Leistungsregler umfasst dabei wenigstens eine Empfangsvorrichtung zum Empfangen der angeforderten Wirkleistung für den Übertragungseinspeisepunkt und eine Bandsteuereinheit, wobei die Bandsteuereinheit dazu eingerichtet ist, ein Wirkleistungsband mit einer Bandobergrenze und einer Banduntergrenze zu verwenden, die jeweils mit einem Abstand um die angeforderte Wirkleistung angeordnet sind, wobei das Wirkleistungsband wenigstens einen Steuerschwellwert zwischen der Bandobergrenze und der Banduntergrenze aufweist, wobei die Bandsteuereinheit dazu eingerichtet ist, den wenigstens einen regenerativen Energieerzeuger, insbesondere einen Windpark, in Abhängigkeit des wenigstens einen Steuerschwellwertes mit einem Steuersignal zu steuern, insbesondere um die angeforderte Wirkleistung als Übertragungsleistung am Übertragungseinspeisepunkt bereitzustellen.

Es wird also insbesondere vorgeschlagen, dass der Leistungsregler wenigstens eine Empfangsvorrichtung zum Empfangen der angeforderten Wirkleistung für den Übertragungseinspeisepunkt und eine Bandsteuereinheit umfasst, wobei die Bandsteuereinheit dazu eingerichtet ist, ein Wirkleistungsband zu verwenden und wenigstens eines regenerativen Energieerzeugers in Abhängigkeit wenigstens eines Steuerschwellwertes zu steuern.

In einer weiteren Ausführungsform ist der Leistungsregler ein Sekundärleistungsregler.

Ein Sekundärleistungsregler ist dabei ein Leistungsregler, der als Steuereinheit in einem elektrischen Versorgungsnetz vorgesehen ist und dazu eingerichtet ist, die Summe aller Wirkleistung(en), die zwischen horizontal gekoppelten Spannungsabschnitten fließen, zu Null zu regeln.

Der Sekundärleistungsregler sorgt also für ein entsprechendes Gleichgewicht innerhalb seines zu regelnden Netzabschnittes.

Vorzugsweise ist der Leistungsregler dazu eingerichtet ist, ein Verfahren nach einem der vorstehenden Ausführungsformen auszuführen.

Ferner wird erfindungsgemäß ein Windpark zum Bereitstellen einer angeforderten Wirkleistung an einem Übertragungseinspeisepunkt eines elektrischen Versorgungsnetzes, der einen ersten Spannungsabschnitt mit einem zweiten Spannungsabschnitt elektrisch verbindet vorgeschlagen.

Der Windpark umfasst dabei wenigstens eine Parksteuereinheit, die dazu eingerichtet ist ein Steuersignal von einem übergeordneten Leistungsregler zu empfangen und ein Anlagensteuersignal vorzugeben, eine Vielzahl von Windenergieanlagen, die dazu eingerichtet sind jeweils eine Windenergieanlagenleistung in Abhängigkeit des empfangenen Steuersignals zu erzeugen, wenigstens ein Anlagentransformator zum Übertragen der erzeugten Windenergieanlagenleistung in ein elektrisches Parknetz, wobei das Parknetz über einen Parktransformator mit dem zweiten Spannungsabschnitt verbunden ist, um die Windenergieanlagenleistung der Windenergieanlagen in Abhängigkeit des empfangenen Steuersignals als Windparkleistung in den zweiten Spannungsabschnitt einzuspeisen.

Demnach umfasst der Windpark wenigstens eine Parksteuereinheit, eine Vielzahl von Windenergieanlagen, wenigstens ein Anlagentransformator sowie ein Parknetz.

In weiteren Ausführungsform ist die Parksteuereinheit ein Windparkregler zur Wirk- und Blindleistungsteuerung.

In einer weiteren Ausführungsform sind die Anlagentransformatoren dazu eingerichtet eine Eingangsspannung in eine Ausgangsspannung zu transformieren, bevorzugt transformieren die Anlagentransformatoren eine von den Windenergieanlagen erzeugte Wechselspannung, insbesondere in einem Spannungsbereich von 500V bis 5kV, in eine Parknetzspannung, insbesondere in Spannungsbereich von 5kV bis 50kV.

In einer weiteren Ausführungsform ist das Parknetz ein dreiphasiges Wechselspannungsnetz und weist bevorzugt eine Parknetzspannung von wenigstens 5kV auf, insbesondere beträgt die Parknetzspannung zwischen 10kV und 20kV.

In einer bevorzugten Ausführungsform ist der Parktransformator ein Mittelspannungstransformator oder Hochspannungstransformator.

Es wird somit insbesondere auch vorgeschlagen, dass die Windenergieanlagen über das Parknetz mit dem Versorgungsnetz elektrisch verbunden sind, um die Windenergieanlagenleistungen der Windenergieanlagen in Abhängigkeit des empfangenen Steuersignals des übergeordneten Leistungsreglers als Windparkleistung in das elektrische Versorgungsnetz einspeisen zu können.

Vorzugsweise ist die Parksteuereinheit dazu eingerichtet ist, ein vorstehend oder nachstehend beschriebenes Verfahren auszuführen.

Erfindungsgemäß wird ferner eine Windenergieanlage zum Bereitstellen einer angeforderten Wirkleistung an einem Übertragungseinspeisepunkt eines elektrischen Versorgungsnetzes, der einen ersten Spannungsabschnitt mit einem zweiten Spannungsabschnitt elektrisch verbindet vorgeschlagen.

Die Windenergieanlage umfasst dabei wenigstens eine Anlagensteuereinheit, die dazu eingerichtet ist, ein Steuersignal von einer übergeordneten Steuerung zu empfangen, vorzugsweise von einem übergeordneten Leistungsregler und/oder von einer Parksteuereinheit, und eine Einspeisevorrichtung, die dazu eingerichtet ist, eine Windenergieanlagenleistung in Abhängigkeit des empfangenen Steuersignals in ein Parknetz einzuspeisen und bereitzustellen.

Demnach umfasst die Windenergieanlage wenigstens eine Anlagensteuereinheit und eine Einspeisevorrichtung.

In einer weiteren Ausführungsform ist die Anlagensteuereinheit als ein Windenergieanlagenregler ausgebildet, der dazu eingerichtet ist mit einem übergeordneten SCADA-System (engl. "Supervisory Control and Data Acquisition") oder mit einem Netzleitsystem zu kommunizieren.

In einer weiteren Ausführungsform ist die Einspeisevorrichtung als ein steuerbarer Vollumrichter ausgebildet.

Vorzugsweise empfängt die Anlagensteuereinheit ein Steuersignal von dem zuvor beschriebenen erfindungsgemäßen Leistungsregler und/oder von der zuvor beschriebenen Parksteuereinheit des erfindungsgemäßen Windparks.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:

Fig. 1 zeigt schematisch eine perspektivische Ansicht einer Windenergieanlage in einer Ausführungsform.

Fig. 2 zeigt schematisch einen Aufbau eines regenerativen Energieerzeugers in einer Ausführungsform.

Fig. 3 zeigt schematisch einen Aufbau eines elektrischen Versorgungsnetzes in dem eine angeforderten Wirkleistung $P_{soll}$ mit einem erfindungsgemäßen Wirkleistungsband bereitgestellt wird.

Fig. 3A zeigt schematisch ein erfindungsgemäßes Bandsteuerprinzip mit einem Wirkleistungsband in einer Ausführungsform.

Fig. 4 zeigt schematisch einen Verfahrensablauf des erfindungsgemäßen Verfahrens in einer Ausführungsform.

Fig. 5 zeigt schematisch einen Aufbau eines elektrischen Versorgungsnetzes mit einem Bandsteuerprinzip in einer weiteren Ausführungsform.

Fig. 5A zeigt schematisch ein Wirkleistungsband in einer weiteren Ausführungsform.

Fig. 6A zeigt schematisch ein Steuerprinzip mit einem Wirkleistungsband in einer weiteren Ausführungsform.

Fig. 6B zeigt schematisch ein Steuerprinzip mit einem Wirkleistungsband in einer weiteren Ausführungsform.

Fig. 6C zeigt schematisch ein Steuerprinzip mit einem Wirkleistungsband in einer weiteren Ausführungsform

Fig. 7 zeigt schematisch ein Steuerprinz mit einem Wirkleistungsband in einer weiteren Darstellungsform.

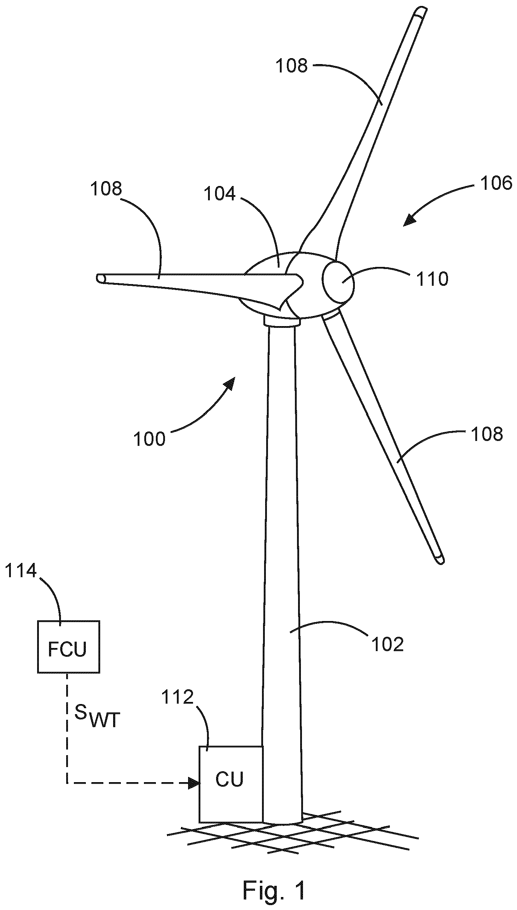

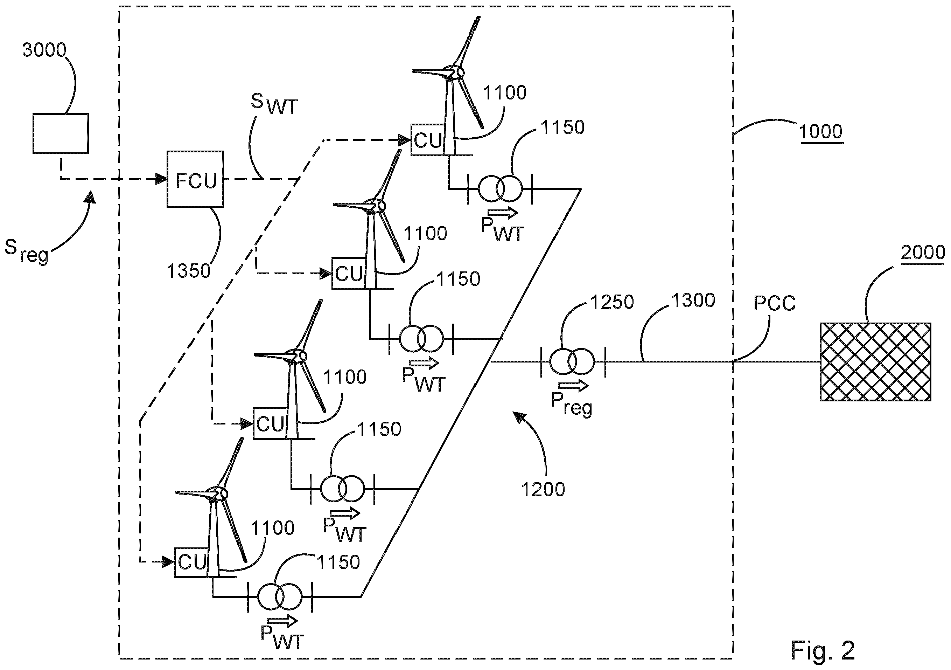

Fig. 1 zeigt eine perspektivische Ansicht einer Windenergieanlage 100 zum Bereitstellen einer angeforderten Wirkleistung in einer Ausführungsform, die beispielsweise ein Teil eines Windparks ist, wie beispielsweise in Fig. 2 gezeigt.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Generator erzeugt hierdurch einen Strom, der mittels eines Vollumrichters, der stromprägend arbeitet, auf einen Windenergieanlagentransformator gegeben wird, der mit einem Windparknetz verbunden ist.

Die Windenergieanlage 100 weist zudem eine Anlagensteuereinheit 112 auf, die dazu eingerichtet, ein Anlagensteuersignal $S_{WT}$ von einer übergeordneten Steuerung 114 zu empfangen, bevorzugt von einer Parksteuereinheit FCU.

Die Anlagensteuereinheit 112 ist beispielsweise als "Control Unit" CU ausgebildet und steuert die Windenergieanlage 100, bevorzugt in Abhängigkeit des empfangenen Anlagensteuersignals $S_{WT}$.

Besonders bevorzugt ist die Anlagensteuereinheit 112 dazu eingerichtet, ein vorstehendes oder nachstehend beschriebenes Verfahren zum Bereitstellen einer angeforderten Wirkleistung auszuführen und/oder an diesem teilzunehmen.

Ferner weist die Windenergieanlage 100 eine Einspeisevorrichtung zum Einspeisen einer Windenergieanlagenleistung $P_{WT}$ auf, bevorzugt einen bzw. den vorstehend oder nachstehend beschriebenen Vollumrichter.

Die Einspeisevorrichtung ist ferner dazu eingereicht, die Windenergieanlagenleistung $P_{WT}$ in ein Parknetz einzuspeisen, bevorzugt in Abhängigkeit des empfangenen Anlagensteuersignals $S_{WT}$.

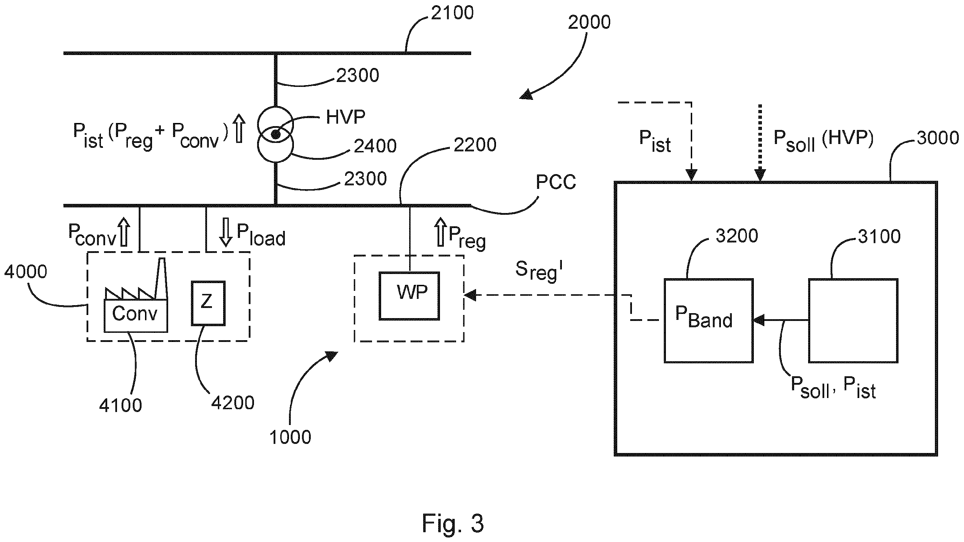

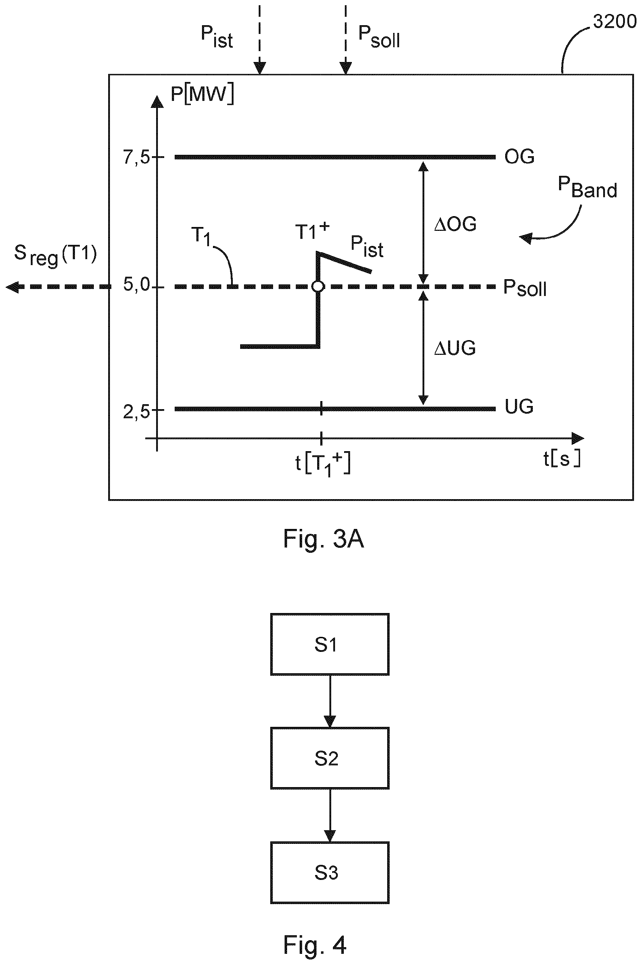

Fig. 2 zeigt einen schematischen Aufbau eines regenerativen Energieerzeugers, nämlich eines Windparks 1000, zum Bereitstellen einer angeforderten Wirkleistung in einer Ausführungsform. Der regenerative Energieerzeuger 1000 ist beispielsweise ein Teil eines elektrischen Versorgungsnetzes 2000, wie beispielsweise in der Fig. 3 gezeigt.

Der Windpark 1000 speist eine Windparkleistung $P_{reg}$ an einem Netzanschlusspunkt PCC in das elektrische Versorgungsnetz 2000 ein und wird bevorzugt von einem Leistungsregler 3000 gesteuert, wie beispielsweise in der Fig. 3 gezeigt.

Der Windpark 1000 umfasst zur Erzeugung der Windparkleistung $P_{reg}$ eine Vielzahl von Windenergieanlagen 1100, insbesondere vier Windenergieanlagen, bevorzugt wie in Fig. 1 gezeigt.

Die Windenergieanlagen 1100 erzeugen eine Windenergieanlagenleistung $P_{WT}$, die jeweils über einen Anlagentransformator 1150 in ein elektrisches Parknetz 1200 eingespeist wird und sich dort zur Windparkleistung $P_{reg}$ überlagert.

Das Parknetz 1200 selbst verbindet die Anlagentransformatoren 1150 elektrisch miteinander und ist zudem mittels einer einen Windparktransformator 1250 aufweisenden Verbindungsleitung 1300 am Netzanschlusspunkt PCC mit dem elektrischen Versorgungsnetz 2000 verbunden.

Der Windpark 1000 umfasst zudem eine Parksteuereinheit 1350, die auch als "Farm Control Unit" (FCU) bezeichnet werden kann und zum Steuern der Windparkleistung $P_{reg}$ vorgesehen ist. Die Parksteuereinheit 1350 ist also dazu eingerichtet, die einzelnen Windenergieanlagen 1100 des Windparks 1000 zu steuern.

Die Parksteuereinheit 1350 steuert bspw. die Windenergieanlagenleistung $P_{WT}$ der Windenergieanlagen 1100 in Abhängigkeit des empfangenen Steuersignals $S_{reg}$ des Leistungsreglers 3000.

Die Parksteuereinheit 1350 steuert zudem bevorzugt auch die Windenergieanlagenleistung $P_{WT}$ der Windenergieanlagen 1100 durch eine Vorgabe eines Anlagensteuersignals $S_{WT}$, das jeweils einer Anlagensteuereinheiten CU der Windenergieanlagen 1100 vorgegeben wird.

Ferner ist die Parksteuereinheit 1350 bevorzugt dazu eingerichtet, ein vorstehendes oder nachstehendes Verfahren zum Bereitstellen einer angeforderten Wirkleistung mit einem Wirkleistungsband auszuführen oder an einem solchen teilzunehmen.

Fig. 3 zeigt schematisch einen Aufbau eines elektrischen Versorgungsnetzes 2000 mit wenigstens einem regenerativen Energieerzeuger 1000, der von einem erfindungsgemäßen Leistungsregler 3000 gesteuert wird.

Das elektrische Versorgungsnetz 2000 umfasst dabei einen ersten Spannungsabschnitt 2100 und einen zweiten Spannungsabschnitt 2200.

Der erste Spannungsabschnitt 2100 und der zweite Spannungsabschnitt 2200 sind für den Leistungsaustausch an einem Übertragungseinspeisepunkt HVP mittels eines Übertragungstransformators 2400 und einer Übertragungsleitung 2300 elektrisch miteinander verbunden.

Der Übertragungstransformator 2400 ist dabei zur Übertragung einer Übertragungsleistung $P_{ist}$ zwischen dem ersten Spannungsabschnitt 2100 und dem zweiten Spannungsabschnitt 2200 eingerichtet und überträgt bevorzugt die Übertragungsleistung Pist vom zweiten Spannungsabschnitt 2200 in den ersten Spannungsabschnitt 2100 und umgekehrt.

Zur Erzeugung der Übertragungsleistung $P_{ist}$ umfasst das elektrische Versorgungsnetz 2000 wenigstens einen steuerbaren, regenerativen Energieerzeuger 1000 bspw. einen Windpark wie in Fig. 2 gezeigt, sowie weitere Netzteilnehmer, bspw. weitere Erzeuger 4100, wie konventionelle Kraftwerke, und Verbraucher 4200, wie bspw. Haushalte oder Hochöfen.

Die Erzeuger 4100 sind dabei zur Einspeisung einer Leistung $P_{conv}$ mit dem zweiten Spannungsabschnitt 2200 elektrisch verbunden und bevorzugt als konventionelle Kraftwerke ausgebildet.

Die Verbraucher 4200 sind zur Ausspeisung einer Leistung $P_{load}$ mit dem zweiten Spannungsabschnitt 2200 elektrisch verbunden, und können bspw. Netzlast bezeichnet werden.

Der steuerbare, regenerativen Energieerzeuger 1000 ist ferner an einem Netzanschlusspunkt PCC mit dem zweiten Spannungsabschnitt 2200 zur Einspeisung einer elektrische Leistung $P_{reg}$ elektrisch verbunden.

Bevorzugt ist der regenerativen Energieerzeuger 1000 ein Windpark WP, wie beispielsweise in der Fig. 2 gezeigt.

Zum Steuern des regenerativen Energieerzeugers 1000 umfasst das elektrische Versorgungsnetz 2000 einen Leistungsregler 3000, der dazu eingerichtet ist, den regenerativen Energieerzeuger 1000 mit einem Steuersignal $S_{reg}$ zu steuern, wie vorstehend oder nachstehend beschrieben.

Der Leistungsregler 3000 umfasst dafür eine Empfangsvorrichtung 3100 und eine Bandsteuereinheit 3200.

Die Empfangsvorrichtung 3100 ist zum Empfangen der angeforderten Wirkleistung $P_{soll}$ eingerichtet, die als Übertragungsleistung $R_{ist}$ am Übertragungseinspeisepunkt eingestellt werden soll. Beispielsweise wird die angeforderte Wirkleistung $P_{soll}$ für den Übertragungseinspeisepunkt hierfür über ein Netzleitsystem von einem Netzbetreiber als Wirkleistungssollwert $P_{soll}$ empfangen.

Bevorzugt ist die Empfangsvorrichtung 3100 zudem zum Empfangen einer erfassten Übertragungsleistung Pist am Übertragungseinspeisepunkt eingerichtet, die beispielsweise am Übertragungseinspeisepunkt gemessen oder für den Übertragungseinspeisepunkt berechnet wird.

Die Bandsteuereinheit 3200 ist ferner zum Erzeugen eines Steuersignals $S_{reg}$ eingerichtet, das dem regenerativen Energieerzeuger 1000 vorgegeben wird.

Die Bandsteuereinheit 3200 verwendet dabei zur Erzeugung des Steuersignals $S_{reg}$ erfindungsgemäß ein Wirkleistungsband $P_{band}$, wie vorstehend oder nachstehend beschrieben.

Das Wirkleistungsband $P_{band}$ ist hierfür in Abhängigkeit der angeforderten Wirkleistung $P_{soll}$ in der Bandsteuereinheit 3200 implementiert, beispielsweise als Steuerprogramm.

Der regenerativen Energieerzeuger 1000 ändert also seine eingespeiste Leistung $P_{reg}$ in Abhängigkeit des Steuersignals $S_{reg}$.

Der Leistungsregler 3000 steuert somit die in den zweiten Spannungsabschnitt 2200 eingespeiste Leistung $P_{reg}$ des regenerativen Energieerzeugers 1000 mit einem Wirkleistungsband $P_{band}$, das in dem Leistungsregler 3000 implementiert ist.

Bevorzugt ist die eingespeiste Leistung $P_{reg}$ dabei eine Wirkleistung.

Besonders bevorzugt ist der Leistungsregler 3000 zudem dazu eingerichtet, ein vorstehendes oder nachstehendes Verfahren zum Bereitstellen einer angeforderten Wirkleistung auszuführen.

Das Steuerprinzip des Wirkleistungsbandes $P_{band}$ wird in der ergänzenden Figur 3A beschrieben.

Fig. 3A zeigt schematisch das erfindungsgemäße Steuerprinzip mit einem Wirkleistungsband $P_{band}$ in einer ergänzenden Ausführungsform, das beispielsweise in der Bandsteuereinheit 3200 des Leistungsreglers

Das Wirkleistungsband $P_{Band}$ umfasst dabei eine Bandobergrenze OG und eine Banduntergrenze UG.

Die Bandgrenzen OG und die Banduntergrenze UG sind dabei jeweils mit einem Abstand $\Delta OG$, $\Delta UG$ um die angeforderte Wirkleistung $P_{soll}$ angeordnet.

Beispielsweise ist die angeforderte Wirkleistung $P_{soll}$ = 5MW und $\Delta OG$ als positiver, absoluter Abstand mit $\Delta OG$ = 2,5MW oberhalb von $P_{soll}$ angeordnet und $\Delta UG$ als negativer, relativer Abstand mit $\Delta OG$ = -50% · $P_{soll}$ = -2.5MW unterhalb von $P_{soll}$ angeordnet. In diesem Beispiel sind die Bandobergrenze OG und die Banduntergrenze UG demnach festgelegt als OG = 7.5MW und UG = 2.5MW.

Das Wirkleistungsband $P_{Band}$ umfasst zudem wenigstens einen Steuerschwellwert T1 zwischen der Bandobergrenze OG und der Banduntergrenze UG der angeforderten Wirkleistung $P_{soll}$.

Der Steuerschwellwert T1 löst eine Erhöhung der Wirkleistungseinspeisung $P_{reg}$ des wenigstens einen, regenerativen Energieerzeugers 1000 aus, wenn der Schwellwert T1 positiv erreicht wird. Der Steuerschwellwert T1 kann also auch als Steigschwellwert bezeichnet werden.

Zur Steuerung des regenerativen Energieerzeugers 1000 wird die Übertragungsleistung $P_{ist}$ bspw. am Übertragungseinspeisepunkt erfasst und der Bandsteuereinheit 3100 bereitgestellt.

Die bereitgestellte Übertragungsleistung $P_{ist}$ kann dann von der Bandsteuereinheit 3100 empfangen werden und als Triggersignal verwendet werden, um den Steigschwellwert T1 auszulösen.

Die erfasste Übertragungsleistung $P_{ist}$ ist ausschnittsweise als kontinuierliches Signal in einem kartesischen Koordinatensystem in der Figur 3A dargestellt, in dem die Wirkleistung P in Megawatt auf der y-Achse und die Zeit t in Sekunden auf der x-Achse abgetragen ist. Bis zum Zeitpunkt $t < t(T1^+)$ erreicht die Übertragungsleistung $R_{ist}$ an der Bandsteuereinheit nicht den Steigschwellwert T1.

Zum Zeitpunkt $t = t(T1^+)$ erreicht die Übertragungsleistung $P_{ist}$ den Steigschwellwert T1 aufgrund einer Wirkleistungserhöhung am HVP, woraufhin die Bandsteuereinheit 3200 das Steuersignal $S_{reg}(T1)$ erzeugt.

Beispielsweise kann die Erhöhung der Übertragungsleistung $R_{ist}$ zum Zeitpunkt t(T1+) auf ein Zuschalten eines Erzeugers oder Verteilnetzabschnittes an den zweiten Spannungsabschnitt in einer Netzaufbausituation zurückgeführt werden.

Das Steuersignal $S_{reg}(T1)$ wird somit in Abhängigkeit des Steigschwellwertes T1 zur Steuerung des wenigstens einen, regenerativen Energieerzeugers 1000 erzeugt, wie in den Figuren 2 und 3 gezeigt.

Das von der angeforderten Wirkleistung $P_{soll}$ abhängige Wirkleistungsband $P_{Band}$ wird somit verwendet, um den wenigstens einen regenerativen Energieerzeuger 1000 in Abhängigkeit des Steigschwellwert T1 mit einem Steuersignal $S_{reg}$ zu steuern, bevorzugt in einer Netzaufbausituation.

Fig. 4 zeigt schematisch einen Verfahrensablauf des erfindungsgemäßen Verfahrens zum Bereitstellen einer angeforderten Wirkleistung $P_{soll}$ an einem Übertragungseinspeisepunkt (HVP) in einer Ausführungsform.

Die angeforderten Wirkleistung $P_{soll}$ wird an einem Übertragungseinspeisepunkt eines elektrischen Versorgungsnetzes bereitgestellt, der einen ersten Spannungsabschnitt mit einem zweiten Spannungsabschnitt elektrisch verbindet. Der zweite Spannungsabschnitt weist dabei wenigstens einen regenerativen Energieerzeuger aufweist, beispielsweise ein Windpark wie in der Figur 2 gezeigt.

In einem ersten Schritt S1 wird die angeforderten Wirkleistung für den Übertragungseinspeisepunkt empfangen, beispielsweise als ein Sollwertsignal von einem Übertragungsnetzbetreiber. Beispielsweise wird die angeforderte Wirkleistung von einem Leistungsregler empfangen, der in dem zweiten Spannungsabschnitt angeordnet ist.

Anschließend wird in einem zweiten Schritt S2 eine Wirkleistungsband mit einer Bandobergrenze und einer Banduntergrenze verwendet bzw. implementiert. Das Wirkleistungsband kann beispielsweise in einem Leistungsregler, wie beispielsweise in der Figur 3 gezeigt, mit definierten Bandgrenzen, Bandabständen und einem Steuerschwellwert T1 in einer Bandsteuereinheit als Steuerprogramm implementiert sein.

Die Bandgrenzen des Wirkleistungsbands sind dabei jeweils mit einem Abstand um die angeforderte Wirkleistung angeordnet sind, wobei das Wirkleistungsband wenigstens einen Steuerschwellwert zwischen der Bandobergrenze und der Banduntergrenze aufweist.

In einem nächsten Schritt S3 wird wenigstens ein regenerativer Energieerzeuger, beispielsweise ein Windpark wie in der Figur 2 oder 3 gezeigt, in Abhängigkeit des wenigstens einen Steuerschwellwertes gesteuert, um die angeforderte Wirkleistung als Übertragungsleistung am Übertragungseinspeisepunkt HVP bereitzustellen.

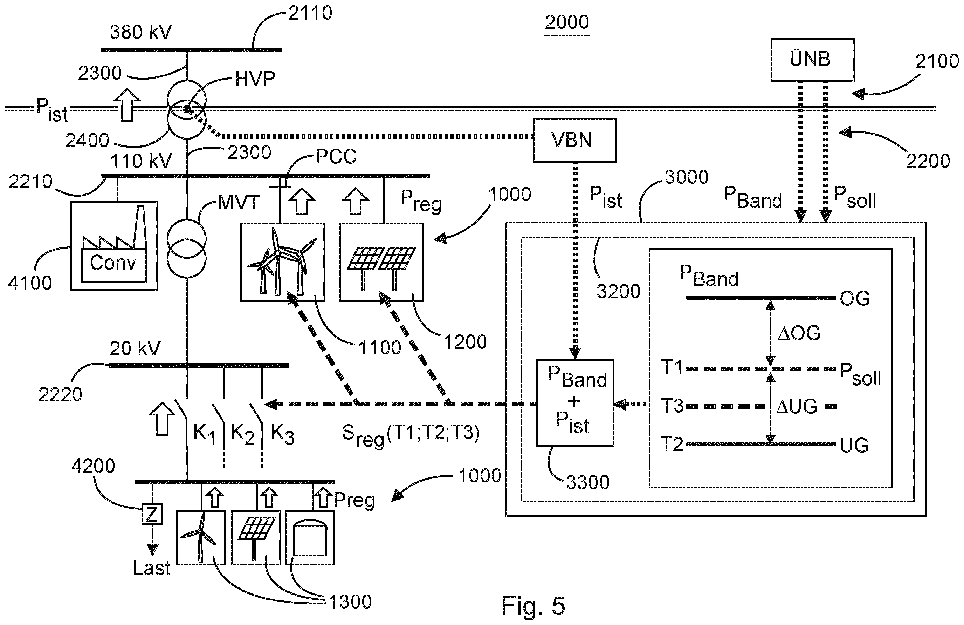

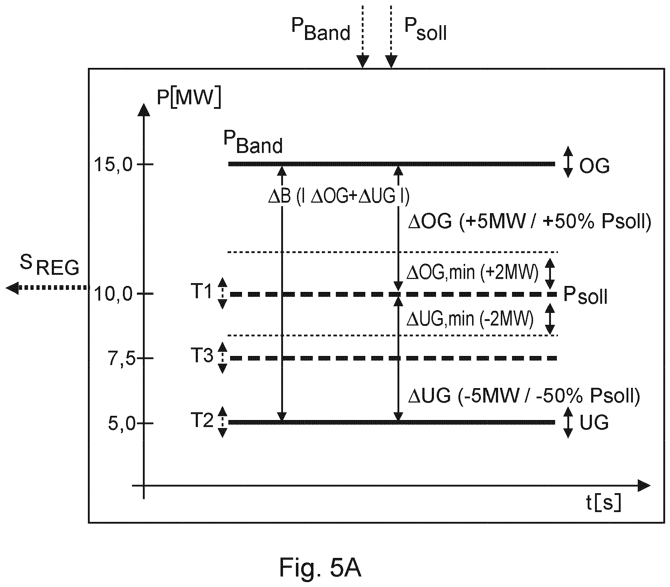

Fig. 5 zeigt schematisch einen Aufbau eines elektrischen Versorgungsnetzes 2000 ähnlich, wie in der Figur 3 gezeigt, mit einem Leistungsregler 3000 der ein Wirkleistungsband verwendet, insbesondere in einer weiteren, bevorzugten Ausführungsform.

Der erste Spannungsabschnitt 2100 und der zweite Spannungsabschnitt 2200 sind dabei vertikal angeordnet, nämlich als ein Übertragungsnetzabschnitt und ein Verteilnetzabschnitt.

Der Übertragungsnetzabschnitt 2100 umfasst dabei eine 380kv-Höchstspannungsebene 2110 und wird vom einem Übertragungsnetzbetreiber ÜBN betrieben.

Der Verteilnetzabschnitt 2200 umfasst dabei eine 110kV-Hochspannungsebene 2210 und eine 20kV-Mittelspannungsebene 2220 und wird von einem Verteilnetzbetreiber (kurz: VBN) betrieben.

Der Übertragungsnetzabschnitt 2100 und der Verteilnetzabschnitt 2200 sind zum Leistungsaustausch der Übertragungsleistung $R_{ist}$ über einen Hochspannungstransformator 2400 und eine Übertragungsleitung 2300 elektrisch miteinander verbunden. Die Übertragungsleistung $P_{ist}$ kann also von dem Verteilnetzabschnitt 2200 in den Übertragungsnetzabschnitt 2100 oder umgekehrt von dem Übertragungsnetzabschnitt 2100 in den Verteilnetzabschnitt 2200 übertragen werden.

Die 110kV-Hochspannungsebene 2210 und eine 20kV-Mittelspannungsebene 2220 des Verteilnetzabschnittes sind über einen Mittelspannungstransformator MVT elektrisch miteinander verbunden.

Zudem umfasst der Verteilnetzabschnitt 2200 elektrische Verbraucher und Erzeuger, nämlich ein konventionelles Kraftwert 4100, das an die 110kV Spannungsebene 2210 angeschlossen ist und Netzlasten 4200, die an die 20kV-Spannungsebene 2220 angeschlossen sind.

Zur Erzeugung der Übertragungsleistung $R_{ist}$ umfasst der Verteilnetzabschnitt 2200 mehrere regenerativen Energieerzeuger 1000, beispielsweise einen Windpark 1100, einen Solarpark 1200 und eine Vielzahl von ungesteuerten, regenerativen Kleinerzeugern 1300.

Die Übertragungsleistung $R_{ist}$ wird also im Verteilnetzabschnitt 2200 erzeugt.

Das Versorgungsnetz 2000 umfasst zudem einen Sekundärleistungsregler 3000 zum Steuern der regenerativen Energieerzeuger 1100, 1200 und 1300 mit einem Steuersignal $S_{reg}$.

Der Sekundärleistungsregler ist dabei dazu eingerichtet ist, den 1100 Windpark und den Solarpark 1200 mit einem Einspeisesignal zu steuern. Der Windpark 1100 und der Solarpark 1200 können also als steuerbare regenerative Energieerzeuger bezeichnet werden.

Zudem ist der Sekundärleistungsregler 3000 dazu eingerichtet, das Zuschalten oder Abschalten der ungesteuerten, regenerativen Kleinerzeugern 1300 mit einem Zuschaltsignal zu steuern.

Hierfür umfasst der Verteilnetzabschnitt 2200 steuerbare Schaltmittel K1, K2, K3, die dazu eingerichtet sind, über das Zuschaltsignal gesteuert zu werden. An die Schaltmittel sind ungesteuerte, regenerative Energieerzeuger elektrisch gekoppelt und können für eine Wirkleistungserhöhung an die 20kV-Spannungsebene 2220 zugeschaltet oder für eine Wirkleistungsreduzierung abgeworfen werden. Die ungesteuerten, regenerativen Energieerzeuger 1300 können also als zuschaltbare Energieerzeuger bezeichnet werden.

Zur Steuerung der regenerativen Energieerzeuger 1100, 1200 und 1300 empfängt der Sekundärleistungsregler 3000 eine angeforderten Wirkleistung $P_{soll}$ sowie ein vorgegebenes Wirkleistungsband $P_{Band}$ von dem Übertragungsnetzbetreiber ÜNB, der die Bandgrenzen OG und UG sowie drei Steuerschwellwerte T1, T2 und T3 vorgibt.

Der Steuerschwellwert T1 ist als ein Steigschwellwert ausgebildet, der Steuerschwellwerte T2 ist als ein Reduzierschwellwert ausgebildet und der Steuerschwellwerte T3 ist als ein Konstantschwellwert ausgebildet. Die angeforderten Wirkleistung $P_{soll}$ wird als Wirkleistungssollwert zusammen mit dem vorgegebenen Wirkleistungsband $P_{band}$ über ein Netzleitsystem empfangen.

Der Sekundärleistungsregler 3000 empfängt zudem eine Übertragungsleistung $R_{ist}$ am HVP, die von einem Verteilnetzbetreiber VNB gemessen wurde.

Der Sekundärleistungsregler 3000 erzeugt anschließend die Steuersignale $S_{reg}(T1)$, $S_{reg}(T2)$, oder $S_{reg}(T3)$ zum Steuern der regenerativen Energieerzeuger 1100, 1200 und 1300 in Abhängigkeit der Steuerschwellwerte T1, T2 und T3, die das entsprechende Steuersignal in Abhängigkeit der erfassten Übertragungsleistung auslösen. Hierfür ist bevorzugt jedes Steuersignal $S_{reg}(T1)$, $S_{reg}(T2)$, oder $S_{reg}(T3)$ jeweils einem Steuerschwellwert T1, T2 oder T3 zugeordnet und in der Bandsteuereinheit in dem Funktionsblock 3300 als Steuerprogramm hinterlegt.

Die Fig. 5A zeigt schematisch ein Wirkleistungsband $P_{Band}$ in einer weiteren Ausführungsform und erläutert ergänzend die Steuerschwellwerte T1, T2 und T3, die in der Figur 5 gezeigt sind.

Das Wirkleistungsband $P_{Band}$ weist, insbesondere im Vergleich zu dem Wirkleistungsband $P_{Band}$, das in der Figur 3A gezeigt ist, jeweils einen Mindestabstand $\Delta OG_{,min}$ und $\Delta UG_{,min}$ in Bezug auf die angeforderte Wirkleistung $P_{soll}$ auf. Der Mindestabstand beträgt beispielsweise +/-2MW und ist gepunktet dargestellt.

Das Wirkleistungsband $P_{Band}$ weist zudem eine Bandobergrenze OG und eine Banduntergrenze UG auf, die jeweils im laufenden Betrieb veränderbar sind. Dies ist durch die Doppelpfeile an den Bandgrenzen veranschaulicht.

Das Wirkleistungsband $P_{Band}$ weist zudem drei Steuerschwellenwerte T1, T2 und T3 auf.

Der erste Steuerschwellwert T1 ist ein Steigschwellwert, der der angeforderten Wirkleistung $P_{soll}$ entspricht, beispielsweise 10MW.

Der zweite Steuerschwellwert T2 ist ein Reduzierschwellwert, der der Banduntergrenze UG entspricht, beispielsweise 5MW.

Der dritter Steuerschwellwert T3 ist ein Konstantschwellwert, der einem vorbestimmten Wert zwischen der angeforderten Wirkleistung Psoll und der Banduntergrenze UG entspricht, beispielsweise 7.5MW.

Die Steuerschwellenwerte T1, T2 und T3 des Wirkleistungsbandes $P_{Band}$, sind dabei im laufenden Betrieb veränderbar. Dies ist durch die Doppelpfeile an den Schwellwerten veranschaulicht.

Das Wirkleistungsband $P_{Band}$ weist zudem eine vorgebbare Wirkleistungsbandbreite $\Delta B$ auf, die eine Betragssumme der Abstände ($\Delta B = |\Delta OG| + |\Delta UG|$) der Bandobergrenze und der Banduntergrenze ist, und beispielsweise 20MW beträgt.

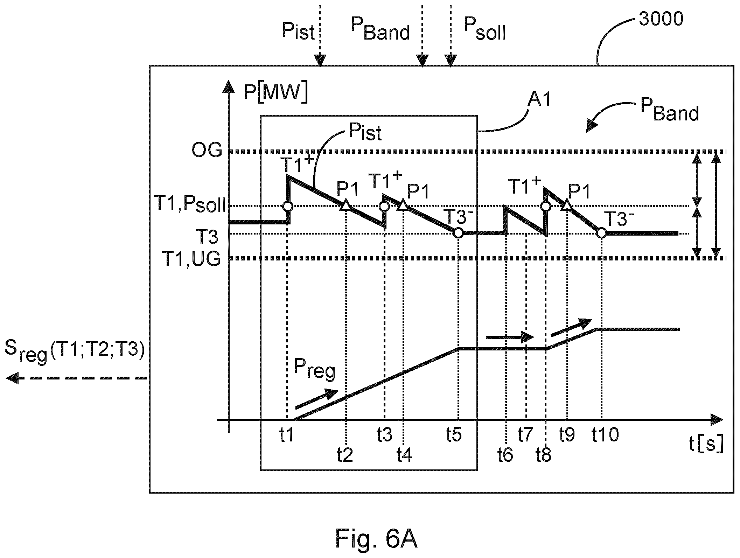

Die Fig. 6A zeigt schematisch das Steuerprinzip mit einem Wirkleistungsband $P_{Band}$ in einer weiteren Ausführungsform, insbesondere wie das Steuerprinzip in dem Leistungsregler 3000 in der Figur 5 umgesetzt wird, besonders bevorzugt am Ausschnitt A1.

Insbesondere wird gezeigt, wie sich die Einspeisung bzw. die erzeugte Leistung $P_{reg}$ des wenigstens einen regenerativen Energieerzeugers in Abhängigkeit der Steuerschwellwerte T1, T2 und T3 ändert.

Der gezeigte Leistungsregler 3000 empfängt zunächst das Wirkleistungsband $P_{Band}$ zusammen mit der angeforderten Wirkleistung $P_{soll}$, beispielsweise von einem Übertragungsnetzbetreiber wie in der Figur 5 gezeigt.

Das Wirkleistungsband $P_{Band}$ umfasst dabei eine Bandobergrenze OG und eine Banduntergrenze UG sowie drei Steuerschwellwerte T1, T2 und T3, insbesondere wie in der Figur 5A gezeigt.

Der Steuerschwellwert T1 löst eine Erhöhung der Einspeisung $P_{reg}$ des wenigstens einen regenerativen Energieerzeugers aus, wenn dieser positiv erreicht wird. T1 wird also mit einer positiven Schaltflanke von der erfassten Übertragungsleistung $P_{ist}$ ausgelöst. Der Steuerschwellwert T1 ist somit ein Steigschwellwert und löst das Steuersignal $S_{reg}(T1)$ aus.

Der Steuerschwellwert T2 löst eine Reduzierung der Einspeisung $P_{reg}$ des wenigstens einen regenerativen Energieerzeugers aus, wenn dieser negativ erreicht wird. T2 wird also mit einer negativen Schaltflanke von der erfassten Übertragungsleistung $P_{ist}$ ausgelöst. Der Steuerschwellwert T2 ist somit ein Reduzierschwellwert und löst das Steuersignal $S_{reg}(T2)$ aus.

Der Steuerschwellwert T3 löst ein Konstanthalten der Einspeisung $P_{reg}$ des wenigstens einen regenerativen Energieerzeugers aus, wenn dieser negativ erreicht wird. T3 wird also mit einer negativen Schaltflanke von der erfassten Übertragungsleistung $R_{ist}$ ausgelöst. Der Steuerschwellwert T3 ist somit ein Konstantschwellwert und löst das Steuersignal $S_{reg}(T3)$ aus.

Der Leistungsregler 3000 empfängt zudem eine erfasste Übertragungsleistung $P_{ist}$, die insbesondere von einem Verteilnetzbetreiber erfasst wird, wie bspw. in der Figur 5 gezeigt.

Die erfasste Übertragungsleistung $R_{ist}$ ist dabei ausschnittsweise als kontinuierliches Signal in einem kartesischen Koordinatensystem dargestellt, in dem die Wirkleistung P in Megawatt auf der y-Achse und die Zeit t in Sekunden auf der x-Achse abgetragen ist.

Die erfasste Übertragungsleistung $R_{ist}$ löst als Triggersignal die Steuerschwellwerte T1, T2 und T3 aus.

Dabei sind Schaltpunkte der erfassten Leistung $R_{ist}$ mit einem Steuerschwellwert T1, T2 oder T3 als Kreise dargestellt. Die Schaltpunkte lösen jeweils ein Steuersignal $S_{reg}(T1; T2; T3)$ aus. Zudem sind Schnittpunkte der erfassten Leistung $R_{ist}$ mit einem Steuerschwellwert T1, T2 oder T3 als Dreiecke dargestellt. Die Schnittpunkte lösen keine Änderung der Einspeisung aus. Die Steuerschwellwerte T1, T2 und T3 werden also richtungsabhängig von der erfasste Übertragungsleistung $R_{ist}$ ausgelöst.

Die Änderung der Wirkleistungseinspeisung $P_{reg}$ des regenerativen Energieerzeugers in Abhängigkeit der drei Steuerschwellwerte T1, T2 und T3 ist dabei als beispielhafter grafischer Verlauf unterhalb des Wirkleistungsbandes $P_{Band}$ dargestellt.

Zum Zeitpunkt $t_1$ springt die erfasste Übertragungsleistung $R_{ist}$ aufgrund einer Lastzuschaltung, beispielsweise durch eine Lastzuschaltung an dem Verteilnetzabschnitt 2200, wie bspw. in der Figur 5 gezeigt.

Die Übertragungsleistung $R_{ist}$ löst anschließend den Steigschwellwert T1 mit einer positiven Schaltflanke an dem Punkt $T1^+$ aus. Entsprechend wird das Steuersignal $S_{reg}(T1)$ vom Leistungsregler 3000 erzeugt und dem wenigstens einen regenerativen Energieerzeuger als Steuersignal $S_{reg}(T1)$ vorgegeben.

Zum Zeitpunkt $t_1$ beginnt der wenigstens eine regenerative Energieerzeuger daraufhin seine eingespeiste Leistung $P_{reg}$ rampenförmig zu erhöhen. Dies ist durch einen nach oben gerichteten Pfeil in dem grafischen Verlauf der Wirkleistungseinspeisung $P_{reg}$ veranschaulicht.

Eine Erhöhung der eingespeisten Leistung $P_{reg}$ des wenigstens einen regenerativen Energieerzeugers bewirkt also, dass die Übertragungsleistung Pist am Übertragungseinspeisepunkt absinkt. Insbesondere wird durch die erhöhte Leistungseinspeisung $P_{reg}$ des wenigstens einen regenerativen Energieerzeugers mehr Wirkleistung im Verteilnetzabschnitt erzeugt und somit weniger Übertragungsleistung Pist am Übertragungseinspeisepunkt ausgetauscht.

Zum Zeitpunkt $t_2$ ändert sich die Einspeisung $P_{reg}$ nicht, da der Steigschwellwert T1 negativ und nicht positiv erreicht wird. Entsprechend wird die Erhöhung weiter beibehalten.

Zum Zeitpunkt $t_3$ ändert sich die Einspeisung $P_{reg}$ ebenfalls nicht, da bereits eine Erhöhung zum Zeitpunkt $t_1$ ausgelöst wurde. Der Sprung der Übertragungsleistung Pist zum Zeitpunkt $t_3$ kann beispielsweise auf eine weitere Lastzuschaltung an den Verteilnetzabschnitt zurückgeführt werden.

Zum Zeitpunkt $t_4$ wird die Einspeisung analog zum Zeitpunkt $t_2$ beibehalten.

Zum Zeitpunkt $t_5$ wird der Steuerschwellwert T3 negativ erreicht, der ein Konstanthalten der Wirkleistungseinspeisung $P_{reg}$ des wenigstens einen regenerativen Energieerzeugers mit einem Steuersignal Sreg(T3) auslöst. Dies ist durch einen nach rechts gerichteten Pfeil in dem grafischen Verlauf der Wirkleistungseinspeisung Preg veranschaulicht.

Ein Konstanthalten der eingespeisten Leistung $P_{reg}$ des wenigstens einen regenerativen Energieerzeugers bewirkt also, dass die Übertragungsleistung Pist am Übertragungseinspeisepunkt konstant bleibt.

Zum Zeitpunkt $t_6$ findet eine erneute Lastzuschaltung statt.

Der anschließende Schnittpunkt P1 zum Zeit-

punkt $t_9$ sowie der Schaltpunkt T3⁻ zum Zeitpunkt $t_{10}$ arbeiten analog zu den Zeitpunkte $t_2$ und $t_4$ bzw. $t_5$.

Ferner veranschaulicht die Figur 6A, dass die Wirkleistungseinspeisung $P_{reg}$ des wenigstens einen regenerativen Energieerzeugers solange beibehalten, bis ein anderer Steuerschwellwert ausgelöst wird.

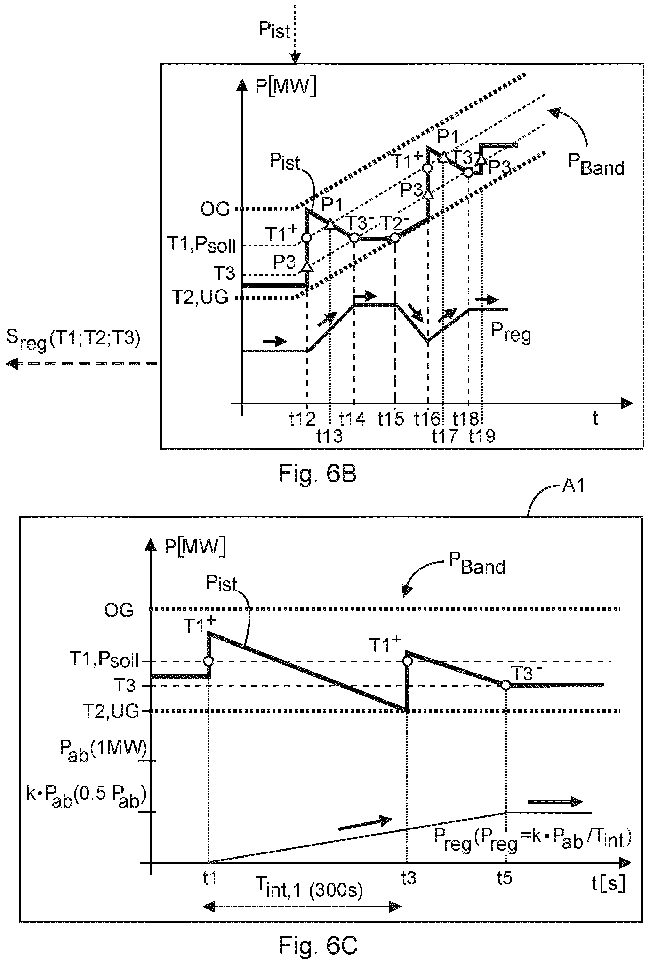

Die Figur 6B zeigt eine weitere Ausführungsform des Steuerprinzips mit einem Wirkleistungsband $P_{Band}$, und ergänzend insbesondere die Figur 6A.

Zum Zeitpunkt $t_{12}$ bzw. ab dem Zeitpunkt $t_{12}$ wird die angeforderte Wirkleistung $P_{soll}$ als ein über der Zeit rampenförmig verlaufender Wirkleistungssollwert vom Netzbetreiber vorgegeben, beispielsweise vom Übertragungsnetzbetreiber des Übertragungsnetzes 2100, wie in der Figur 5 gezeigt.

Das Wirkleistungsband $P_{Band}$ folgt somit der angeforderten Wirkleistung $P_{soll}$, da die Bandgrenzen OG und UG sowie die Steuerschwellwerte in Bezug auf die angeforderte Wirkleistung $P_{soll}$ festgelegt sind.

Zu den Zeitpunkten $t_{12}$, $t_{14}$, $t_{16}$, und $t_{18}$ wird eine Erhöhung bzw. ein Konstanthalten der eingespeisten Wirkleistung $P_{reg}$ des wenigstens einen regenerativen Energieerzeugers ausgelöst, insbesondere wie zuvor zur Figur 6A beschrieben.

Zum Zeitpunkt $t_{15}$ wird der Steuerschwellwert T2 negativ erreicht, der eine Reduzierung der Wirkleistungseinspeisung $P_{reg}$ des wenigstens einen regenerativen Energieerzeugers mit einem Steuersignal Sreg(T2) auslöst. Dies ist durch einen nach unten gerichteten Pfeil in dem grafischen Verlauf der Wirkleistungseinspeisung $P_{reg}$ veranschaulicht.

Eine Reduzierung der eingespeisten Leistung $P_{reg}$ des wenigstens einen regenerativen Energieerzeugers bewirkt also, dass die Übertragungsleistung $P_{ist}$ am Übertragungseinspeisepunkt ansteigt. Insbesondere wird durch die reduzierte Leistungseinspeisung $P_{reg}$ des wenigstens einen regenerativen Energieerzeugers weniger Wirkleistung im Verteilnetzabschnitt erzeugt und somit mehr Übertragungsleistung $P_{ist}$ am Übertragungseinspeisepunkt ausgetauscht bzw. aus dem Übertragungsnetz bezogen wird.

Die Fig. 6C zeigt des Bandsteuerprinzips mit einem Wirkleistungsband $P_{Band}$ in einer weiteren Ausführungsform, bei dem die Wirkleistungseinspeisung $P_{reg}$ begrenzt wird, und ergänzt insbesondere die Figur 6A.

Dazu zeigt die Figur 6C den Ausschnitt A1 der Figur 6A vergrößert.

Zum Zeitpunkt $t_1$ wird der Steuerschwellwert T1 positiv erreicht, der ein Erhöhung der Wirkleistungseinspeisung $P_{reg}$ des wenigstens einen regenerativen Energieerzeugers mit einem Steuersignal $S_{reg}(T3)$ auslöst, insbesondere wie zuvor zur Figur 6A beschrieben.

Dabei wird eine begrenzte Wirkleistungseinspeisung $P_{reg}$ pro Zeit für den wenigstens einen regenerativen Energieerzeuger vorgegeben, wobei die vorgegebene Wirkleistungseinspeisung $P_{reg}$ definiert ist als:

$$P_{reg} = k * P_{ab} / T_{int}.$$

Dabei ist k ein Begrenzungsfaktor, $P_{ab}$ eine Abgabeleistung des wenigstens einen, regenerativen Energieerzeugers, und $T_{int}$ ein vorbestimmtes Zeitintervall.

Wie dem grafischen Verlauf unterhalb des Wirkleistungsbandes $P_{Band}$ zu entnehmen ist, wird die Wirkleistungseinspeisung $P_{reg}$ mit einem Begrenzungsfaktor von k=0.5 für $T_{int}$ = 300s begrenzt, also auf $P_{reg}$=0.5MW.

Es wird also insbesondere vorgeschlagen den regenerativen Energieerzeuger zu begrenzen, obwohl dieser dazu eingerichtet ist, eine höhere Abgabeleistung $P_{ab}$, beispielsweise $P_{ab}$=1MW, einzuspeisen.

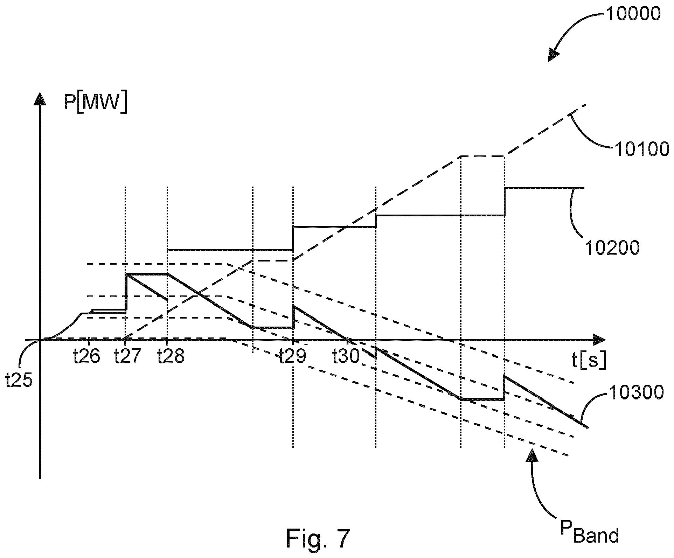

Fig. 7 zeigt schematisch ein Steuerprinz mit einem Wirkleistungsband in einer weiteren Darstellungsform 10000.

Die Darstellungsform 10000 zeigt die Verläufe der Leistungen, insbesondere der, mittels des vorstehend oder nachstehend beschriebenen Verfahrens gesteuerten regenerativen Einspeisung 10100, der versorgten Last im Verteilnetz 10200 und der Austauschleistung 10300 über der Zeit.

Insbesondere betrifft der dargestellte Fall ein Ablasten des Übertragungsnetzes, also eine Entlastung der Kraftwerke am Übertragungsnetz oder das Auflasten eines anderen Verteilnetzes. Der Sinn hierbei ist der Leistungstransfer von einem Verteilnetz in ein anderes Verteilnetz.

Um die Austauschleistung 10300 ist das vorstehend oder nachstehend beschriebene Wirkleistungsband $P_{Band}$ gelegt.

Das Verfahren wird dabei wie vorstehend oder nachstehend beschrieben ausgeführt.

Die Summer der gesteuerten regenerativen Einspeisung 10100 und der Austauschleistung 1300 entspricht dabei der Leistung der vorsorgten Last 10200.

Zum Zeitpunkt t25 wird ein Verteilnetz zugeschaltet.

Zum Zeitpunkt t26 wird das Austauschband $P_{Band}$ aktiviert.

Im Anschluss daran wird die regenerative Einspeisung zunehmend erhöht, beginnend zum Zeitpunkt t27.

Das Zuschalten von Lasten, bspw. zu den Zeitpunkten t27, t28, t29 führt zunächst einmal dazu, dass mehr Leistung benötigt wird. Diese Leistung wird zunächst durch die Austauschleistung 10300 bereitgestellt und mit der Zeit durch regenerative Leistung 10100 ersetzt.

Zum Zeitpunkt t30 ist das Verteilnetz dann in der Lage sich vollständig regenerativ zu versorgen, und kann bspw. weitere Leistung als Austauschleistung an andere Verteilnetz bereitstellen (dargestellt durch die Austauschleistung im negativen Quadranten).

Das erfindungsgemäße Bandsteuerprinzip kann somit vorteilhafterweise eingesetzt werden, um Windparks und Verbünde von Windparks in einem Spannungsabschnitt bzw. Netzgebiet zu steuern.

Zudem ist es möglich, die Windparks und Verbünde von Windparks in Kombination mit anderen steuerbaren Erzeugern, Lasten und Speichersystemen zu steuern.

Dabei werden einige Vorteile erreicht, die nachfolgend stichpunktartig zusammengefasst sind:

- Vereinfachung der Betriebsführung von Netzen in kritischen Situationen und einer hohen Anzahl von regenerativen Energieerzeugern im Spannungsabschnitt

- Im Vergleich zum händischen Netzbetrieb in kritischen Netzsituationen erlaubt die Kombination aus einer automatischen Einspeisungsteuerung der regenerativen Energieerzeuger mit einem Einspeisesignal und einer automatischen oder manuellen Lastzuschaltung ungesteuerter Energieerzeuger oder Netzlasten mit einem Zuschaltsignal, die schnelle (teil-)automatische Wiederversorgung

- Ein Lastfolgebetrieb kann durch Übermittelung einer relativen Sollwertabweichung (Abweichung von $P_{soll}$ zu $P_{ist}$) in anderen kritischen Netzsituationen genutzt werden

- Das Bandsteuerprinzip kann auch für das Auflasten von Kraftwerken oder Ablasten von erneuerbaren Energieerzeugern verwendet werden, um die technische Minimallast von Großkraftwerken sicherzustellen

**Patentansprüche**

1. Verfahren zum Bereitstellen einer angeforderten Wirkleistung ($P_{soll}$), insbesondere mittels wenigstens eines Windparks (1100) in einer Netzwiederaufbausituation, an einem Übertragungseinspeisepunkt (HVP) eines elektrischen Versorgungsnetzes (2000), der einen ersten Spannungsabschnitt (2100) mit einem zweiten Spannungsabschnitt (2200) elektrisch verbindet, wobei der zweite Spannungsabschnitt (2200) wenigstens einen regenerativen Energieerzeuger (1000) aufweist, umfassend die Schritte:

  - Empfangen (S1) der angeforderten Wirkleistung ($P_{soll}$) für den Übertragungseinspeisepunkt (HVP);,
  - Verwenden (S2) eines Wirkleistungsbandes ($P_{band}$), insbesondere zur Steuerung einer Übertragungsleistung ($P_{ist}$) an dem Übertragungseinspeisepunkt (HVP), mit

    - einer Bandobergrenze (OG) und einer Banduntergrenze (UG), die jeweils mit ei-

nem Abstand ($\Delta$OG, $\Delta$UG) um die angeforderte Wirkleistung ($P_{soll}$) angeordnet sind, wobei
    - das Wirkleistungsband ($P_{band}$) wenigstens einen Steuerschwellwert (T1) zwischen der Bandobergrenze (OG) und der Banduntergrenze (UG) aufweist;

  - Steuern (S3) wenigstens eines regenerativen Energieerzeugers (1000), insbesondere des Windparks (1100), in Abhängigkeit des wenigstens einen Steuerschwellwertes (T1), insbesondere um die angeforderte Wirkleistung ($P_{soll}$) als Übertragungsleistung (Pist) am Übertragungseinspeisepunkt (HVP) bereitzustellen.

2. Verfahren nach Anspruch 1, wobei

  - der erste Spannungsabschnitt (2100) des elektrischen Versorgungsnetzes (2000) eine erste Nennspannung ($U_{1N}$) aufweist, und
  - der zweite Spannungsabschnitt (2200) des elektrischen Versorgungsnetzes (2000) eine zweite Nennspannung ($U_{2N}$) aufweist, wobei
  - die erste Nennspannung ($U_{1N}$) größer ist als die zweite Nennspannung ($U_{2N}$), wobei die erste Nennspannung ($U_{1N}$) bevorzugt wenigstens 110kV, insbesondere 380kV, beträgt und die zweite Nennspannung ($U_{2N}$) bevorzugt wenigstens 10kV, insbesondere 110kV, beträgt.

3. Verfahren nach Anspruch 1 oder 2, wobei

  - am Übertragungseinspeisepunkt (HVP) ein Transformator (HVT) angeordnet ist, wobei der Transformator dazu eingerichtet ist, den ersten Spannungsabschnitt (2100) und den zweiten Spannungsabschnitt (2200) elektrisch miteinander zu verbinden.

4. Verfahren nach einem der vorstehenden Ansprüche, wobei

  - das Wirkleistungsband ($P_{Band}$) von einem Übertragungsnetzbetreiber (ÜNB) empfangen wird.

5. Verfahren nach einem der vorstehenden Ansprüche, wobei

  - das Steuern (S3) des wenigstens einen regenerativen Energieerzeugers in Abhängigkeit wenigstens einer erfassten Übertragungsleistung ($P_{ist}$) erfolgt, wobei die Übertragungsleistung an einem bzw. dem Übertragungseinspeisepunkt (HVP) erfasst wird, insbesondere, dass die Übertragungseinspeisepunkt von einem Verteilnetzbetreiber (VNB) erfasst wird, und bevorzugt

- eine bzw. die erfasste Übertragungsleistung $R_{ist}$ als Triggersignal zum Auslösen des wenigstens einen Steuerschwellwertes verwendet wird.

6. Verfahren nach einem der vorstehenden Ansprüche, wobei

- der jeweilige Abstand der Bandobergrenze (OG) und der Banduntergrenze (UG) um die angeforderte Wirkleistung ausgebildet ist als ein Relativabstand und/oder als ein Absolutabstand in Bezug auf die angeforderte Wirkleistung.

7. Verfahren nach einem der vorstehenden Ansprüche, wobei

- der jeweilige Abstand der Bandobergrenze (OG) und der Banduntergrenze (UG) jeweils einen Mindestabstand ($\Delta OG_{,min}$; $\Delta UG_{,min}$) in Bezug auf die angeforderte Wirkleistung ($P_{soll}$) umfasst, bevorzugt einen Absolutmindestabstand in einem Wertebereich von wenigstens 5 MW, insbesondere 12.5 MW oder 25 MW.

8. Verfahren nach einem der vorstehenden Ansprüche, wobei

- der Abstand der Bandobergrenze (OG) ein vorbestimmter Positivabstand ($\Delta OG$) zu der angeforderten Wirkleistung ($P_{soll}$) ist, bevorzugt ein Positivabstand in einem Wertebereich von:

  - wenigstens 3% bis 6% einer mit dem zweiten Spannungsabschnitt gekoppten konventioneller installierter Leistung;
  - wenigstens 40% bis 60% der angeforderten Wirkleistung, bevorzugt 50%, oder
  - wenigstens 60% bis 80% der angeforderten Wirkleistung, bevorzugt 70%.

9. Verfahren nach einem der vorstehenden Ansprüche, wobei

- der Abstand der Banduntergrenze (UG) ein vorbestimmter Negativabstand ($\Delta UG$) zu der angeforderten Wirkleistung ($P_{soll}$) ist, bevorzugt ein Negativabstand in einem Wertebereich von:

  - wenigstens 3% bis 6% einer mit dem zweiten Spannungsabschnitt gekoppten konventionellen installierter Leistung;
  - wenigstens 40% bis 60% der angeforderten Wirkleistung, bevorzugt 50%, oder
  - wenigstens 60% bis 80% der angeforderten Wirkleistung, bevorzugt 70%.

10. Verfahren nach einem der vorstehenden Ansprüche, wobei

- das Wirkleistungsband eine vorgebbare Wirkleistungsbandbreite ($\Delta B$) aufweist, wobei die Wirkleistungsbandbreite eine Betragssumme der Abstände ($\Delta B=|\Delta OG|+|\Delta UG|$) der Bandobergrenze ($\Delta OG$) und der Banduntergrenze ($\Delta UG$) zur angeforderten Leistung ($P_{soll}$) ist, und die Wirkleistungsbandbreite bevorzugt wenigstens 10MW beträgt, insbesondere 25MW oder 50MW.

11. Verfahren nach einem der vorstehenden Ansprüche, wobei

- das Wirkleistungsband ($P_{band}$) im laufenden Betrieb verändert wird, insbesondere durch wenigstens eine Veränderung des Wirkleistungsbandes der Liste von Veränderungen umfassend:

  - ein Vergrößern oder Verkleinern einer Wirkleistungsbandbreite;
  - ein Verändern des Abstands der Bandobergrenze;
  - ein Verändern des Abstands der Banduntergrenze; und
  - ein Verschieben des Wirkleistungsbandes um einen vorbestimmten Offsetfaktor, bevorzugt in Abhängigkeit wenigstens einer Abhängigkeit der Liste von Abhängigkeiten aufweisend:

    - eines Empfangs eines externen Änderungssignals,
    - einer Stabilitätsgröße des elektrischen Versorgungsnetzes, insbesondere einer Netzsensitivität, wobei Stabilitätsgröße ausdrückt, wie stark das Netz auf eine Änderung einer Größe reagiert, die einen Einfluss auf den Spannungsabschnitt nimmt,
    - einer Anzahl von an den zweiten Spannungsabschnitt gekoppelten regenerativen Energieerzeugern, insbesondere einer Umrichterdurchdringung des Versorgungsnetzes,
    - einer installierten Gesamtleistung im Versorgungsnetz, insbesondere im ersten Spannungsabschnitt und/oder im zweiten Spannungsabschnitt,
    - einer gesamten synchronen Schwungmasse im Versorgungsnetz, insbesondere im ersten Spannungsabschnitt und/oder im zweiten Spannungsabschnitt, und
    - einer Anzahl und Größe an den zweiten Spannungsabschnitt zuzuschaltender Lasten, insbesondere Verteilungsnetzabschnitte.

12. Verfahren nach einem der vorstehenden Ansprüche, wobei

- ein Steuerschwellwert (T1, T2, T3) ein Steigschwellwert ($T_1$) ist, der der angeforderten Wirkleistung ($P_{soll}$) entspricht, wobei der Steigschwellwert ($T_1$) insbesondere dazu vorgesehen ist:

- eine Erhöhung der Wirkleistungseinspeisung ($P_{reg}$) des wenigstens einen, regenerativen Energieerzeugers auszulösen, wenn der Steigschwellwert ($T_1$) positiv erreicht wird.

13. Verfahren nach einem der vorstehenden Ansprüche, wobei

- ein Steuerschwellwert (T1, T2, T3) ein Reduzierschwellwert ($T_2$) ist, der der Banduntergrenze (UG) entspricht, wobei der Reduzierschwellwert ($T_2$) insbesondere dazu vorgesehen ist:

- eine Reduzierung ($T_2$) der Wirkleistungseinspeisung ($P_{reg}$) des wenigstens einen, regenerativen Energieerzeugers auszulösen, wenn der Reduzierschwellwert ($T_1$) negativ erreicht wird, insbesondere um einem Wirkleistungsüberschuss im ersten Spannungsabschnitt entgegenzuwirken.

14. Verfahren nach einem der vorstehenden Ansprüche, wobei

- ein Steuerschwellwert (T1, T2, T3) ein Konstantschwellwert ($T_3$) ist, der einem vorbestimmten Wert zwischen der angeforderten Wirkleistung ($P_{soll}$) und der Banduntergrenze (UG) entspricht, wobei der Konstantschwellwert ($T_3$) insbesondere dazu vorgesehen ist:

- ein Konstanthalten der Wirkleistungseinspeisung ($P_{reg}$) des wenigstens einen, regenerativen Energieerzeugers (1100,1200) auszulösen, wenn der Konstantschwellwert ($T_3$) negativ erreicht wird.

15. Verfahren nach einem der Ansprüche 12 bis 14, wobei

- ein Einspeisesignal in Abhängigkeit des jeweiligen Steuerschwellwerts erzeugt wird, wenn der jeweilige Steuerschwellwert erreicht ist, und wobei das Einspeisesignal wenigstens einem steuerbaren regenerativen Energieerzeuger zum Steuern der Wirkleistungseinspeisung vorgeben wird, insbesondere um die Wirkleistungseinspeisung des steuerbaren regenerativen Energieerzeugers zu erhöhen, zu reduzieren oder konstantzuhalten, und/oder

- ein Zuschaltsignal in Abhängigkeit des jeweiligen Steuerschwellwerts erzeugt wird, wenn der jeweilige Steuerschwellwert erreicht ist, und wobei das Zuschaltsignal wenigstens einem zuschaltbaren regenerativen Energieerzeuger zum Steuern der Wirkleistungseinspeisung vorgeben wird, insbesondere um den zuschaltbaren regenerativen Energieerzeugers an den zweiten Spannungsabschnitt zuzuschalten oder wegzuschalten.

16. Verfahren nach einem der vorstehenden Ansprüche, wobei

- eine bzw. die angeforderte Wirkleistung ($P_{soll}$) von einem Netzbetreiber vorgegeben wird, bevorzugt als ein von einem Übertragungsnetzbetreiber des ersten Spannungsabschnittes vorgegebener Wirkleistungssollwert, insbesondere als ein über der Zeit konstant oder rampenförmig verlaufender Wirkleistungssollwert, und/oder

- das Wirkleistungsband ($P_{band}$) bzw. die Bandobergrenze (OG), die Banduntergrenze (UG), oder der wenigstens eine Steuerschwellwert (T1; T2;T3) von einem Netzbetreiber des ersten Spannungsabschnittes vorgegeben wird.

17. Verfahren nach einem der vorstehenden Ansprüche, wobei

- der wenigstens eine Steuerschwellwert (T1, T2, T3) im laufenden Betrieb verändert wird, insbesondere durch wenigstens eine Veränderung der Liste von Veränderungen umfassend:

- ein Vergrößern oder Verkleinern des Steigschwellwertes;
- ein Vergrößern oder Verkleinern des Reduzierschwellwertes;
- ein Vergrößern oder Verkleinern des Konstantschwellwertes;
bevorzugt in Abhängigkeit wenigstens einer Abhängigkeit der Liste von Abhängigkeiten aufweisend:

- eines empfangen externen Änderungssignals,
- einer Stabilitätsgröße des elektrischen Versorgungsnetzes, insbesondere einer Netzsensitivität, wobei Stabilitätsgröße ausdrückt, wie stark das Netz auf eine Änderung einer Größe reagiert, die einen Einfluss auf das den Spannungsabschnitt nimmt,

- einer Anzahl von an den zweiten Spannungsabschnitt gekoppelten regenerativen Energieerzeugern, insbesondere einer Umrichterdurchdringung des Versorgungsnetzes,

- einer installierten Gesamtleistung im Versorgungsnetz, insbesondere im ersten Spannungsabschnitt und/oder im zweiten Spannungsabschnitt,

- einer gesamten synchronen Schwungmasse im Versorgungsnetz, insbesondere im ersten Spannungsabschnitt und/oder im zweiten Spannungsabschnitt,

- einer Anzahl und Größe an den zweiten Spannungsabschnitt zuzuschaltender Lasten, insbesondere Verteilungsnetzabschnitte.

18. Verfahren nach einem der vorstehenden Ansprüche, wobei

- das Steuern des wenigstens einen, regenerativen Energieerzeugers (1100, 1200) in Abhängigkeit des wenigstens einen Steuerschwellwertes (T1, T2, T3) den weiteren Schritt umfasst:

- Vorgeben einer begrenzten Wirkleistungseinspeisung ($P_{reg}$) pro Zeit für den wenigstens einen regenerativen Energieerzeuger (1100, 1200), wobei die vorgegebene Wirkleistungseinspeisung ($P_{reg}$) definiert ist als:

$$P_{reg} = k * P_{ab} / T_{int},$$

wobei k ein Begrenzungsfaktor ist, $P_{ab}$ eine Abgabeleistung des wenigstens einen, regenerativen Energieerzeugers ist, und $T_{int}$ ein vorbestimmtes Zeitintervall ist.

19. Verfahren nach Anspruch 18, wobei

- der Begrenzungsfaktor k kleiner ist als 1, und insbesondere in einem Wertebereich liegt der Liste von Wertebereichen aufweisend:

- 0.2 bis 0.4;
- 0.4 bis 0.6; und
- 0.6 bis 0.8.

20. Verfahren nach Anspruch 18 oder 19, wobei

- der Begrenzungsfaktor k im laufenden Betrieb verändert wird, bevorzugt in Abhängigkeit von einer Primärregelgeschwindigkeit gegenregelnder, konventioneller Energieerzeuger, die an den zweiten Spannungsabschnitt gekoppelt sind und/oder

- in Abhängigkeit einer Schwingung nach einer Leistungsfahrt.

21. Verfahren nach Anspruch 18 bis 20, wobei

- das vorbestimmte Zeitintervall $T_{int}$ kleiner ist als 10 Minuten, insbesondere 5 Minuten, 1 Minute oder 30 Sekunden.

22. Leistungsregler (3000), insbesondere ein Sekundärleistungsregler, zum Bereitstellen einer angeforderten Wirkleistung ($P_{soll}$) an einem Übertragungseinspeisepunkt (HVP) eines elektrischen Versorgungsnetzes (2000), der einen ersten Spannungsabschnitt (2100) mit einem zweiten Spannungsabschnitt (2200) elektrisch verbindet, wobei der zweite Spannungsabschnitt (2200) wenigstens einen, regenerative Energieerzeuger (1100, 1200) aufweist, wenigstens umfassend:

- eine Empfangsvorrichtung zum Empfangen der angeforderten Wirkleistung ($P_{soll}$) für den Übertragungseinspeisepunkt (HVP);
- eine Bandsteuereinheit,

- wobei die Bandsteuereinheit dazu eingerichtet ist, ein Wirkleistungsband ($P_{band}$) mit einer Bandobergrenze (OG) und einer Banduntergrenze (UG) zu verwenden, die jeweils mit einem Abstand um die angeforderte Wirkleistung ($P_{soll}$) angeordnet sind, wobei das Wirkleistungsband ($P_{band}$) wenigstens einen Steuerschwellwert (T1) zwischen der Bandobergrenze (OG) und der Banduntergrenze (UG) aufweist,

- wobei die Bandsteuereinheit dazu eingerichtet ist, den wenigstens einen regenerativen Energieerzeuger (1100, 1200), insbesondere einen Windpark (1100), in Abhängigkeit des wenigstens einen Steuerschwellwertes (T1) mit einem Steuersignal $S_{reg}$ zu steuern, insbesondere um die angeforderte Wirkleistung ($P_{soll}$) als Übertragungsleistung ($P_{ist}$) am Übertragungseinspeisepunkt (HVP) bereitzustellen.

23. Leistungsregler nach Anspruch 22, wobei

- der Leistungsregler dazu eingerichtet ist, ein Verfahren nach einem der Ansprüche 1 bis 21 auszuführen.

24. Windpark (1000) zum Bereitstellen einer angefor-

derten Wirkleistung ($P_{soll}$) an einem Übertragungseinspeisepunkt (HVP) eines elektrischen Versorgungsnetzes (2000), der einen ersten Spannungsabschnitt (2100) mit einem zweiten Spannungsabschnitt (2200) elektrisch verbindet, wenigstens umfassend:

- eine Parksteuereinheit (1350), die dazu eingerichtet ist ein Steuersignal ($S_{reg}$) von einem übergeordneten Leistungsregler (3000) zu empfangen und ein Anlagensteuersignal ($S_{WT}$) vorzugeben;
- eine Vielzahl von Windenergieanlagen (1100), die dazu eingerichtet sind jeweils eine Windenergieanlagenleistung ($P_{WT}$) in Abhängigkeit des empfangenen Steuersignals ($S_{reg}$) zu erzeugen;
- wenigstens ein Anlagentransformator (1150) zum Übertragen der erzeugten Windenergieanlagenleistung ($P_{WT}$) in ein elektrisches Parknetz (1200), wobei
- das Parknetz (1200) über einen Parktransformator (1250) mit dem zweiten Spannungsabschnitt (2200) verbunden ist, um die Windenergieanlagenleistung ($P_{WT}$) der Windenergieanlagen (1100) in Abhängigkeit des empfangenen Steuersignals ($S_{reg}$) als Windparkleistung ($P_{reg}$) in den zweiten Spannungsabschnitt einzuspeisen.

25. Windpark (1100) nach Anspruch 24, wobei

- die Parksteuereinheit dazu eingerichtet ist, ein Verfahren nach einem der Ansprüche 1 bis 21 auszuführen.

26. Windenergieanlage (1100) zum Bereitstellen einer angeforderten Wirkleistung ($P_{soll}$) an einem Übertragungseinspeisepunkt (HVP) eines elektrischen Versorgungsnetzes (2000), der einen ersten Spannungsabschnitt (2100) mit einem zweiten Spannungsabschnitt (2200) elektrisch verbindet, wenigstens umfassend:

- eine Anlagensteuereinheit, die dazu eingerichtet ist, ein Steuersignal ($S_{reg}$) von einer übergeordneten Steuerung zu empfangen, vorzugsweise von einem übergeordneten Leistungsregler (3000) und/oder einer Parksteuereinheit (1350);
- eine Einspeisevorrichtung, die dazu eingerichtet ist, eine Windenergieanlagenleistung ($P_{WT}$) in Abhängigkeit des empfangenen Steuersignals ($S_{reg}$) in ein Parknetz einzuspeisen und bereitzustellen.

27. Windenergieanlage nach Anspruch 26, wobei

- die Anlagensteuereinheit dazu eingerichtet ist, ein Verfahren nach einem der Ansprüche 1 bis 21 auszuführen.

Fig. 1

Fig. 2

EP 3 829 017 A1

Fig. 3

EP 3 829 017 A1

Fig. 3A

Fig. 4

Fig. 5

Fig. 5A

Fig. 6A

Fig. 6B

Fig. 6C

Fig. 7

**Europäisches Patentamt**
**European Patent Office**
**Office européen des brevets**

## EUROPÄISCHER RECHERCHENBERICHT

Nummer der Anmeldung

EP 20 20 2786

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/100125 A1 (WOBBEN PROPERTIES GMBH [DE]) 7. Juni 2018 (2018-06-07) * Seiten 1-12; Abbildungen 2-4 * ----- | 1-11, 15-27 | INV. H02J3/38 F03D7/02 F03D7/04 F03D9/25 |
| A | US 2018/358839 A1 (PEREZ MARCELO A [US] ET AL) 13. Dezember 2018 (2018-12-13) * Absätze [0006] - [0034]; Abbildung 1 * ----- | 1-27 | |
| A,D | US 2010/264741 A1 (TOGARE RADHAKRISHNA [US]) 21. Oktober 2010 (2010-10-21) * Absätze [0001] - [0008]; Abbildungen 1-7 * ----- | 1-27 | |
| A | WO 2009/036895 A2 (REPOWER SYSTEMS AG [DE]; ZEUMER JOERG [DE] ET AL.) 26. März 2009 (2009-03-26) * Seiten 1-10; Abbildungen 1-5 * ----- | 1-27 | |

| | | | RECHERCHIERTE SACHGEBIETE (IPC) |
|---|---|---|---|
| | | | H02J F03D |

Der vorliegende Recherchenbericht wurde für alle Patentansprüche erstellt

| Recherchenort | Abschlußdatum der Recherche | Prüfer |
|---|---|---|
| München | 7. April 2021 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 2786

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2021

| Im Recherchenbericht angeführtes Patentdokument | Datum der Veröffentlichung | Mitglied(er) der Patentfamilie | Datum der Veröffentlichung |
|---|---|---|---|
| WO 2018100125 A1 | 07-06-2018 | BR 112019011071 A2 | 01-10-2019 |
| | | CA 3043980 A1 | 07-06-2018 |
| | | CN 110036549 A | 19-07-2019 |
| | | DE 102016123384 A1 | 07-06-2018 |
| | | EP 3549226 A1 | 09-10-2019 |
| | | JP 2019537416 A | 19-12-2019 |
| | | KR 20190088541 A | 26-07-2019 |
| | | US 2020003181 A1 | 02-01-2020 |
| | | WO 2018100125 A1 | 07-06-2018 |
| US 2018358839 A1 | 13-12-2018 | AU 2018285903 A1 | 31-10-2019 |
| | | US 2018358839 A1 | 13-12-2018 |
| | | WO 2018231673 A1 | 20-12-2018 |
| US 2010264741 A1 | 21-10-2010 | CN 102301555 A | 28-12-2011 |
| | | EP 2419982 A1 | 22-02-2012 |
| | | JP 5351331 B2 | 27-11-2013 |
| | | JP 2012524328 A | 11-10-2012 |
| | | KR 20120006479 A | 18-01-2012 |
| | | TW 201039116 A | 01-11-2010 |
| | | US 2010264741 A1 | 21-10-2010 |
| | | WO 2010120316 A1 | 21-10-2010 |
| WO 2009036895 A2 | 26-03-2009 | CA 2700248 A1 | 26-03-2009 |
| | | CN 101861690 A | 13-10-2010 |
| | | DE 102007044601 A1 | 09-04-2009 |
| | | DK 2191551 T3 | 17-08-2020 |
| | | EP 2191551 A2 | 02-06-2010 |
| | | ES 2812528 T3 | 17-03-2021 |
| | | US 2010312409 A1 | 09-12-2010 |
| | | WO 2009036895 A2 | 26-03-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 20100264741 A1
- DE 102007044601 A1